# EUROPÄISCHE PATENTANMELDUNG

(11) **EP 3 994 982 A1**
(43) Veröffentlichungstag der Anmeldung: **11.05.2022**
(21) Anmeldenummer: 21203881.4
(22) Anmeldetag: 21.10.2021
(51) Int. Cl.: A01M 7/00

(54) **LANDWIRTSCHAFTLICHE FELDSPRITZE UND SPRITZVORRICHTUNG FÜR EINE LANDWIRTSCHAFTLICHE FELDSPRITZE**

(30) Priorität: 02.11.2020 DE 102020128770
(71) Anmelder: HORSCH LEEB Application Systems GmbH, 94405 Landau an der Isar (DE)
(72) Erfinder: Leeb, Theodor, 94405 Landau an der Isar (DE); Leeb, Jonas, 94405 Landau an der Isar (DE)
(74) Vertreter: v. Bezold & Partner Patentanwälte - PartG mbB

(57) **Zusammenfassung**

Die Erfindung betrifft eine Spritzvorrichtung für eine landwirtschaftliche Feldspritze zum dosierten Ausbringen von Spritzflüssigkeit, vorzugsweise auf landwirtschaftlichen Nutzflächen. Die Spritzvorrichtung umfasst ein Spritzgestänge mit seitlichen Auslegern, die jeweils eine Mehrzahl von Ausbringelementen zum Versprühen und/oder Feinverteilen der Spritzflüssigkeit aufweisen. Um eine verbesserte Zudosierung einer Spritzflüssigkeit per Direkteinspeisung zu ermöglichen, ist hierbei an jedem Ausleger mindestens eine Mischkammer (20; 20a) zum Vermischen mindestens zweier Spritzflüssigkeiten und ein Fluidverteiler (20; 28) zum Verteilen der von der Mischkammer vermischten Spritzflüssigkeiten auf mehrere Teilströme angeordnet. Hierbei ist jedes der Ausbringelemente (13) über eine Ausbringleitung (15; 16) mit einem der Verteilerauslässe (23) des Fluidverteilers fluidisch verbunden. Hierbei können die Mischkammer (20) und der Fluidverteiler (20) als bauliche Einheit und/oder kombinierte Mischkammer-Fluidverteilereinheit (20) ausgeführt sein. Alternativ kann der Fluidverteiler (28) stromab zur Mischkammer (20A) als separate Komponente angeordnet sein.

## Beschreibung

Die Erfindung betrifft eine Spritzvorrichtung für eine landwirtschaftliche Feldspritze zum dosierten Ausbringen von Spritzflüssigkeit, vorzugsweise auf landwirtschaftlichen Nutzflächen. Die Spritzvorrichtung umfasst ein Spritzgestänge mit seitlichen Auslegern und mindestens eine Mischkammer zum Vermischen von Spritzflüssigkeit. Die Erfindung betrifft ferner eine landwirtschaftliche Feldspritze mit einer solchen Spritzvorrichtung.

Landwirtschaftliche Feldspritzen werden zum Ausbringen bzw. zur Applikation von flüssigen Wirkstoffen, z. B. Pflanzenschutz- und/oder Düngemittel, verwendet. Derartige Feldspritzen mit einem quer zur Fahrtrichtung orientierten und über einen Pflanzenbestand bewegten Spritzgestänge sind in unterschiedlichen Ausführungsvarianten bekannt.

Mit derartigen Feldspritzen soll das Ziel verfolgt werden, ein definiertes Flüssigkeitsvolumen an Spritzflüssigkeit, z. B. Pflanzenschutz- und/oder Düngemittel, gleichmäßig und mit definierbarer Intensität auf einem Pflanzenbestand auszubringen. Um die Spritzflüssigkeit großflächig auf den zu bearbeitenden Nutzflächen auszubringen, weisen Spritzgestänge derartiger Feldspritzen seitliche faltbare Ausleger mit großer Arbeitsbreite auf, teilweise von mehr als zwanzig Metern. Für Transportfahrten werden solch breite Spritzgestänge gefaltet und eingeklappt. Im ausgeklappten Zustand sind die Ausleger quer zur Fahrtrichtung angeordnet. Am Spritzgestänge sind zum dosierten Ausbringen der Spritzflüssigkeit in Abständen zueinander angeordnete Ausbringelemente, z. B. Spritzdüsen, vorhanden. Die Ausbringelemente erzeugen einen zum Boden bzw. zum Pflanzenbestand hin ausgerichteten Sprühkegel zum gewünschten Verteilen der Spritzflüssigkeit.

Bei der heute praxisüblichen Verwendung von in einem großen Vorratsbehälter fertig angemischter Spritzflüssigkeit ist bei heterogenem Schaderregervorkommen oder Wachstumsstadien der Verbrauch an Pflanzenschutzmittel hoch, wenn in der Teilfläche die Schadschwelle unterschritten wird oder das Wachstumsstadium ausreichend ist und somit keine Applikation indiziert ist.

Um Überfahrten einzusparen und um die Wirkstoffzusammensetzung entsprechend den vorliegenden Erfordernissen auf der Ackerfläche schnell verändern zu können, sind aus dem Stand der Technik sog. "Direkteinspeisesysteme" bekannt, bei denen ein in einer Flüssigkeit gelöster Wirkstoff, z. B. ein auszubringendes Pflanzenschutzmittel, bei Bedarf zu einer Trägerflüssigkeit oder einer bereits fertig angemischten Spritzflüssigkeit per Direkteinspeisung zudosiert werden kann.

Die hier aus der Praxis bekannten Feldspritzen haben jedoch den Nachteil, dass es bei einer zentralen Zudosierung per Direkteinspeisung zu zeitlich starken Verzögerungen kommt, wenn der Einspeiseort zu weit von den Spritzdüsen entfernt ist und sich die Fluidstrecken vom Einspeiseort zu den einzelnen Spritzdüsen zudem deutlich unterscheiden. Dadurch tritt der sog. Schmetterlingseffekt auf, da das per Direkteinspeisung erzeugte Spritzflüssigkeitsgemisch nicht sofort an allen Spritzdüsen anliegt, sondern sich erst verzögert über die gesamte Arbeitsbreite aufbaut und es dadurch zu einer zumindest zeitweisen ungleichmäßigen Verteilung des Wirkstoffes kommt.

Um eine teilflächenspezifische Applikation zu ermöglichen, sind aus der Praxis ferner Feldspritzen bekannt, die mehrere voneinander unabhängige Flüssigkeitskreisläufe für verschiedene Wirkstoffmittel aufweisen. In Abhängigkeit der gewünschten teilflächenspezifischen Behandlung können die Flüssigkeitskreisläufe bzw. die diesen zugeordneten Ausbringdüsen entsprechend zu- bzw. weggeschaltet werden. Nachteilig an derartigen Ansätzen ist, dass in Abhängigkeit der Anzahl an verschiedenen Wirkstoffmittel jeweils voneinander getrennte Flüssigkeitskreisläufe an der Feldspritze aufgebaut werden müssen, welche wiederum kostenintensiv sind und viel Bauraum benötigen. Ebenso ist es möglich, dass sich die Spritzkegel der wenigstens zwei nebeneinander angeordneten Ausbringdüsen gegenseitig beeinflussen, wodurch die Verteilqualität wiederum verschlechtert wird.

Alternative Ansätze, bei denen die Direkteinspeisung bzw. Zudosierung eines Pflanzenschutzmittels erst unmittelbar in oder an jeder Spritzdüse erfolgt, vermeiden zwar zusätzliche Spritzdüsen, haben jedoch den Nachteil, dass an jeder Spritzdüse zusätzliche Ventiltechnik und eine Mischkammer vonnöten ist, was kostenaufwändig ist. Ferner erschwert der beschränkte Bauraum im Bereich der Spritzdüse eine homogene Vermischung.

Es ist somit eine Aufgabe der Erfindung, eine verbesserte Technik zum Ausbringen von Spritzflüssigkeit mittels eines Spritzgestänges bereitzustellen, mittels der Nachteile herkömmlicher Techniken vermieden werden können. Die Aufgabe der Erfindung ist es insbesondere, eine Technik zum Ausbringen von Spritzflüssigkeit mittels eines Spritzgestänges bereitzustellen, mittels welcher eine verbesserte Zudosierung einer Spritzflüssigkeit per Direkteinspeisung ermöglicht wird.

Die Aufgabe wird gelöst durch die Merkmale des unabhängigen Anspruchs. Vorteilhafte Weiterbildungen sind in den abhängigen Ansprüchen und der Beschreibung angegeben.

Gemäß einem allgemeinen Gesichtspunkt der Erfindung wird eine Spritzvorrichtung für eine landwirtschaftliche Feldspritze zum dosierten Ausbringen von Spritzflüssigkeit, vorzugsweise auf landwirtschaftlichen Nutzflächen, bereitgestellt. Die Spritzvorrichtung umfasst ein schwenkbares Spritzgestänge, umfassend zwei seitliche Ausleger, die jeweils eine Mehrzahl von Ausbringelementen zum Versprühen und/oder Feinverteilen der Spritzflüssigkeit aufweisen.

Die Spritzvorrichtung zeichnet sich dadurch aus, dass an jedem Ausleger mindestens eine Mischkammer zum Vermischen mindestens zweier Spritzflüssigkeiten angeordnet ist. Die Mischkammer weist einen ersten Einlass, vorzugsweise zum Einlassen eines ersten Flüssigkeitsstroms, und einen zweiten Einlass, vorzugsweise zum Einlassen eines zweiten Flüssigkeitsstroms, auf. Die Mischkammer kann auch mehrere zweite Einlässe, d. h. mehr als zwei Einlässe aufweisen, um drei oder mehr Flüssigkeitsströme in die Mischkammer einzuleiten. Die Mischkammer ist ausgebildet, wenigstens zwei Flüssigkeiten, vorzugsweise in unterschiedlichen Mengen, zu vermischen, vorzugsweise homogen zu vermischen.

Ferner ist an jedem Ausleger mindestens ein Fluidverteiler zum Verteilen der von der Mischkammer vermischten Spritzflüssigkeiten auf mehrere Teilströme angeordnet, aufweisend mehrere Verteilerauslässe für die Teilströme.

Mit anderen Worten ist an jedem Ausleger somit mindestens eine Einrichtung zum Vermischen mindestens zweier Spritzflüssigkeiten und zum Verteilen der vermischten Spritzflüssigkeiten auf mehrere Teilströme angeordnet. Die Einrichtung hat somit zwei Funktionen, nämlich das Vermischen von zugeführten Spritzflüssigkeiten und das anschließende Verteilen, was auch als Aufteilen oder Verzweigen bezeichnet werden kann, der vermischten Spritzflüssigkeit auf mehrere Teilströme, die in Form mehrerer hydraulisch paralleler Teilströme über die Verteilerauslässe ausgeleitet werden.

Hierzu umfasst diese Einrichtung die Mischkammer und, stromab von der Mischkammer, den Fluidverteiler als funktionale Komponenten. Die Mischkammer und der Fluidverteiler können hierbei als bauliche Einheit und damit als kombinierte Mischkammer-Fluidverteilereinheit oder als zwei getrennte Bauteile ausgeführt sein. Die Mischkammer und/oder der Fluidverteiler sind bevorzugt an einem Ausleger des Spritzgestänges angeordnet.

Die Spritzvorrichtung zeichnet sich ferner dadurch aus, dass jedes der Ausbringelemente über eine Fluidleitung, nachfolgend als Ausbringleitung oder Düsenleitung bezeichnet, mit einem der Verteilerauslässe fluidisch verbunden ist. Die Fluidleitung verbindet somit ein Ausbringelement fluidisch mit einem Verteilerauslass eines Fluidverteilers, der am gleichen Ausleger wie das Ausbringelement angeordnet ist. Ein Flüssigkeitsstrom von Spritzflüssigkeit wird mittels des Fluidverteilers in Teilströme verzweigt und mittels der Ausbringleitungen auf getrennten Teilströmungswegen vom Fluidverteiler zu den jeweiligen Ausbringelementen gefördert.

Das Anordnen an jedem Ausleger mindestens einer Mischkammer mit nachgeordnetem Fluidverteiler zum Vermischen mindestens zweier Spritzflüssigkeiten und zum Verteilen der vermischten Spritzflüssigkeiten auf mehrere Teilströme, wobei den Ausbringelementen jeweils über einen der Verteilerauslässe einer der Teilströme an vermischter Spritzflüssigkeit zugeleitet wird, bietet mehrere Vorteile.

Erstens wird eine teilflächenspezifische Applikation von Spritzflüssigkeit ermöglicht, da an den Auslegern mittels den dort angeordneten Mischkammern gleichzeitig unterschiedliche Spritzflüssigkeiten bzw. Mischungen von Spritzflüssigkeiten ausgebracht werden können.

Zweitens kann die zeitliche Verzögerung, bis eine in der Mischkammer erzeugte Mischung die Ausbringelemente erreicht, geringgehalten werden, da die Mischkammern direkt am Ausleger angeordnet sind, so dass die Ausbringleitungen kurzgehalten werden können. Ferner werden die Ausbringelemente eines Auslegers nicht durch ein gemeinsames Düsenrohr gespeist, sondern durch unterschiedliche Leitungen, hier als Ausbringleitung oder auch als Düsenleitung bezeichnet. Auf ein herkömmliches, längs am Ausleger verlaufendes langes Düsenrohr zur Speisung von mehreren Ausbringelementen, z. B. Spritzdüsen, wird somit verzichtet. Stattdessen werden die Ausbringelemente über die an den Fluidverteiler angeschlossenen Ausbringleitungen gespeist, um den Ausbringelementen über hydraulisch parallele Teilströme Spritzflüssigkeit zuzuführen. Da die Ausbringleitungen nur Teilströme weiterleiten, um z. B. nur eine oder zwei Spritzdüsen mit Spritzflüssigkeit zu versorgen, können diese im Vergleich zu einem herkömmlichen Düsenrohr mit kleinerem Durchmesser ausgeführt werden und ermöglichen somit entsprechend höhere Förderungsdrücke und höhere Fördergeschwindigkeiten. Dadurch kann der durchschnittliche Zeitverzug selbst reduziert werden

Drittens können Unterschiede in den zeitlichen Verzögerungen, bis eine in der Mischkammer erzeugte Mischung die einzelnen Ausbringelemente erreicht, die zum vorgenannten Schmetterlingseffekt führt, verhindert oder zumindest reduziert werden. Der Grund liegt darin, dass eine Mischung von Spritzflüssigkeit nicht, wie es bei Verwendung eines herkömmlichen gemeinsamen Düsenrohrs der Fall wäre, die Ausbringelemente nacheinander erreicht, sondern diese über die Ausbringleitungen gespeist werden, um den Ausbringelementen über hydraulisch parallele Teilströme Spritzflüssigkeit zuzuführen. Dies bietet den Vorteil, dass Unterschiede in den Zeitverzügen, bis die durch die Mischkammer vermischte Spritzflüssigkeit die einzelnen Ausbringelemente erreicht, entsprechend reduziert und je nach Ausführungsform sogar verhindert werden können. Dies ermöglicht ein gleichmäßigeres Ausbringen von Spritzflüssigkeit, insbesondere beim Anschalten, d. h. beim Start des Spritzvorgangs, oder beim Wechsel der Spritzflüssigkeit bzw. deren Mischung.

In einer vorteilhaften Ausführungsform sind die Mischkammer und der Fluidverteiler als bauliche Einheit und/oder kombinierte Mischkammer-Fluidverteilereinheit ausgeführt. Die kombinierte Mischkammer-Fluidverteilereinheit entspricht somit einem Beispiel der vorstehend beschriebenen Einrichtung zum Vermischen mindestens zweier Spritzflüssigkeiten und zum Verteilen der vermischten Spritzflüssigkeiten auf mehrere Teilströme, die zwei Funktionen aufweist und in einer Komponente baulich integriert: nämlich das Vermischen von zugeführten Spritzflüssigkeiten und das anschließende Verteilen der vermischten Spritzflüssigkeit auf mehrere Teilströme, um diese in Form mehrerer hydraulisch paralleler Teilströme über die Verteilerauslässe auszuleiten. Die kombinierte Mischkammer-Fluidverteilereinheit kann beispielsweise als Mischkammer ausgeführt sein, bei der die durch die Mischkammer erzeugte vermischte Spritzflüssigkeit nicht über lediglich einen Auslass ausgegeben wird, sondern über die mehreren Auslässe als parallele Teilströme an vermischter Spritzflüssigkeit. Der Endbereich der Mischkammer bildet somit den Fluidverteiler aus. Diese Ausführungsform ermöglicht eine baulich platzsparende Ausführung.

In einer alternativen Ausführungsform ist der Fluidverteiler als von der Mischkammer separates Bauteil stromab zur Mischkammer angeordnet, wobei einem Verteilereinlass des Fluidverteilers aus einem Auslass der Mischkammer austretende Spritzflüssigkeit zuführbar ist bzw. zugeführt wird. Diese Ausführungsform bietet den Vorzug, dass eine herkömmliche Mischkammer mit nur einem Auslass verwendet werden kann, der ein entsprechender Fluidverteiler nachgeschaltet ist, um die Aufteilung in die parallelen Teilströme und die Verteileranschlüsse für die Ausbringleitungen bereitzustellen.

In einer weiteren bevorzugten Ausführungsform sind die Ausbringleitungen derart ausgelegt, vorzugsweise derart dimensioniert, dass die einem Fluidverteiler zugeordneten Teilströme auf ihren getrennten Teilströmungswegen vom Fluidverteiler zu den jeweiligen Ausbringelementen im Wesentlichen den gleichen Druckabfall und gleichen Zeitverzug, bis die Teilströme an dem jeweiligen Ausbringelement ankommen, aufweisen. Unter dem gleichen Zeitverzug können Unterschiede in den Zeitverzügen von kleiner 5 Sekunden, vorzugsweise kleiner 3 Sekunden, verstanden werden. Diese Ausbringleitungen können entsprechend ausgelegt werden, indem die Länge und/oder der Durchmesser der Ausbringleitungen, die an der gleichen Mischkammer angeschlossen sind, zweckmäßig festgelegt wird. Der Durchmesser der Ausbringleitungen ist bevorzugt gleich groß.

In einer weiteren Ausführungsvariante ist jedes der Ausbringelemente über eine separate Ausbringleitung mit einem der Verteilerauslässe fluidisch verbunden. Anders ausgedrückt verbindet jede Ausbringleitung in dieser Variante genau ein Ausbringelement mit einem Verteilerauslass. Gemäß dieser Ausführungsvariante weisen die Ausbringleitungen somit keine Verzweigung zwischen dem Verteilerauslass und dem Ausbringelement auf. Unterschiede in den Zeitverzügen, bis die Spritzflüssigkeit die einzelnen Ausbringelemente erreicht, können hier entsprechend besonders vorteilhaft reduziert und je nach Ausführungsform sogar verhindert werden.

In einer alternativen Ausführungsform weist zumindest eine der Ausbringleitungen, vorzugsweise alle Ausbringleitungen, jeweils zumindest eine Verzweigungsstelle auf, die eine Mehrzahl von Leitungszweigen bereitstellt, wobei jeweils ein Leitungszweig die Verzweigungsstelle mit einem Ausbringelement verbindet. An der Verzweigungsstelle wird der vom Auslass des Fluidverteilers kommende Teilvolumenstrom nochmals aufgeteilt. Im Vergleich zu separaten Ausbringleitungen für alle Ausbringelemente kann hier für die Ausbringleitungen benötigter Bauraum optimiert werden. Die Verzweigungsstelle kann nach Art einer Y-Verzweigung oder nach Art einer T-Verzweigung ausgebildet sein, beispielsweise durch ein T-Stück oder ein zweckmäßig ausgeführtes Verbindungsstück. In einer bevorzugten Ausführungsvariante ist genau eine solche Verzweigungsstelle je Ausbringleitung vorgesehen.

In einer weiteren Ausführungsform kann die Anzahl der Verteilerauslässe des Fluidverteilers im Bereich von 4 bis 16 oder im Bereich von 6 bis 12 liegen. Dies ermöglicht einen vorteilhaften Kompromiss aus kurzen Verzögerungszeiten und Anzahl an benötigten Mischkammern. Je nach Gesamtanzahl der Ausbringelemente werden somit mehrere, in Längsrichtung des Auslegers verteilt angeordnete, Mischkammern benötigt.

In einer weiteren Ausführungsvariante weisen diejenigen Ausbringleitungen, die am gleichen Fluidverteiler angeschlossen sind, jeweils die gleiche Länge auf. Anders ausgedrückt haben in dieser Ausführungsform alle Ausbringleitungen jeweils eines Fluidverteilers die gleiche Länge, wohingegen optional die Möglichkeit besteht, dass Ausbringleitungen von verschiedenen Fluidverteilern und damit auch verschiedenen zugeordneten Mischkammern unterschiedlich lang sein können. Hierbei können alle Ausbringleitungen jeweils eines Fluidverteilers ferner bevorzugt den gleichen Durchmesser aufweisen und entsprechend den gleichen Druckabfall innerhalb der Ausbringleitung aufweisen. Dies bietet den Vorzug, dass Unterschiede in den Zeitverzügen, bis die Spritzflüssigkeit die einzelnen Ausbringelemente erreicht, vermieden oder zumindest reduziert werden.

Gemäß einer Ausführungsvariante weisen jedoch alle Ausbringleitungen der Spritzvorrichtung die gleiche Länge auf. Anders ausgedrückt sind in dieser Variante alle Strömungswege durch die Ausbringleitungen zwischen einem Ausbringelement und dem jeweiligen Verteilerauslass, d. h. Auslass des Fluidverteilers, gleich lang. Dies bietet den Vorzug, dass die Teilströmungswege vom Verteilerauslass zum Ausbringelement für alle Ausbringelemente gleich lang sind, obwohl die räumlichen Abstände der Ausbringelemente zum Verteilerauslass, über den sie gespeist werden, zum Teil stark unterschiedlich sein können. Besonders bevorzugt ist, wenn alle Ausbringleitungen der Spritzvorrichtung gleich lang sind und den gleichen Durchmesser aufweisen und entsprechend den gleichen Druckabfall innerhalb der Ausbringleitung aufweisen. Folglich können Differenzen in den Zeitverzügen, bis die aus den Verteilerauslässen austretende Spritzflüssigkeit die hierüber gespeisten Ausbringelemente erreicht, vorteilhaft verhindert werden.

In einer bevorzugten weiteren Ausführungsvariante sind die Ausbringleitungen als Schlauchleitungen und/oder als flexible Leitungen ausgeführt oder umfassen zumindest Abschnitte, die als Schlauchleitungen und/oder als flexible Leitungen ausgeführt sind. Dies ermöglicht eine kosteneffiziente, platzsparende Anbringung der Ausbringleitungen am Ausleger. Alternativ können die Ausbringleitungen auch als Rohre ausgeführt sein oder Rohrleitungen umfassen, beispielsweise aus einem metallischen Werkstoff.

In einer weiteren Ausführungsvariante weisen die Ausbringleitungen oder zumindest ein Teil der Ausbringleitungen einen nicht-geraden Verlauf oder anders ausgedrückt, einen gekrümmten Verlauf, auf. Beispielsweise können die Ausbringleitungen oder zumindest ein Teil der Ausbringleitungen mindestens einen Abschnitt aufweisen, der in Längsrichtung des Auslegers entlang eines der Ausleger geführt ist, und mindestens einen Abschnitt aufweisen, der in Vertikalrichtung entlang eines der Ausleger geführt ist. Ferner besteht optional die Möglichkeit, dass zumindest ein Teil der Ausbringleitungen S-förmig oder mäanderförmig geführt ist.

In einerweiteren Ausführungsform können die Ausbringleitungen einen Innendurchmesser von kleiner 10 mm, weiter vorzugsweise von kleiner 6 mm, aufweisen. Der Innendurchmesser kann beispielsweise 4 mm aufweisen. Dadurch können im Vergleich zu herkömmlichen Düsenrohren wesentlich höhere Strömungsgeschwindigkeiten erreicht werden. In einer weiteren Ausführungsform können die Ausbringleitungen eine Mindestlänge von 25 cm oder von mindestens 50 cm oder von mindestens 1 Meter aufweisen.

Vorstehend wurde bereits festgestellt, dass es besonders vorteilhaft ist, wenn die Ausbringleitungen die gleiche Länge aufweisen. In einer weiteren Ausführungsform unterscheiden sich die Ausbringleitungen in ihren Längen um nicht mehr als 30%, wodurch die Differenzen in den Zeitverzügen, bis Spritzflüssigkeit über die Ausbringleitungen die Ausbringelemente erreicht, im Vergleich zu einem herkömmlichen Düsenrohr ebenfalls vorteilhaft reduziert werden können.

In einer weiteren Ausführungsform sind die Ausbringleitungen derart ausgelegt, vorzugsweise derart dimensioniert, dass ein Druckabfall vom Fluidverteiler, insbesondere ausgehend von den Auslässen des Fluidverteilers, bis zum jeweiligen Ausbringelement jeweils maximal 2 bar ist, weiter vorzugsweise jeweils maximal 1,5 bar ist. Dies kann durch entsprechende zweckmäßige Wahl des Durchmessers und Länge der Ausbringleitung realisiert werden. Dies verbessert das möglichst gleichmäßige Ausbringen der Spritzflüssigkeit.

Alternativ oder zusätzlich können die Ausbringleitungen derart ausgelegt sein, dass ein Zeitverzug der Teilströme für ihren Strömungsweg von der Mischkammer bis zum Erreichen der jeweiligen Ausbringelemente jeweils maximal 5 Sekunden, weiter vorzugsweise maximal 2 Sekunden, weiter vorzugsweise maximal 1 Sekunde, ist. Dies kann unter Berücksichtigung des am Auslass der Mischkammer im Spritzbetrieb anliegenden üblichen Fluiddrucks wiederum durch entsprechende zweckmäßige Wahl des Durchmessers und der Länge der Ausbringleitung realisiert werden. Dadurch können schnelle Reaktionszeiten beim An- und Abschalten des Spritzgestänges oder bei Wechsel der Spritzflüssigkeit ermöglicht werden.

In einer weiteren bevorzugten Ausführungsform ist jeder der Ausleger in mehrere Teilabschnitte unterteilt, wobei an jedem Teilabschnitt eine Mehrzahl der Ausbringelemente zum Versprühen und/oder Feinverteilen der Spritzflüssigkeit angeordnet ist und jedes Ausbringelement genau einem Teilabschnitt zugeordnet ist. Hierbei weist jeder Ausleger mehrere der Fluidverteiler und Mischkammern auf, derart, dass jedem Teilabschnitt eine Mischkammer und ein Fluidverteiler zugeordnet ist, entweder als kombinierte Mischkammer-Fluidverteilereinheit oder als separate Bauteile. Hierbei wird die von der Mischkammer vermischte Flüssigkeit von dem Fluidverteiler in Teilströme aufgeteilt. Die dem jeweiligen Teilabschnitt zugeordneten Ausbringelemente sind mit dem Fluidverteiler dieses Teilabschnitts über entsprechende Ausbringleitungen verbunden.

Es ist auch möglich, dass dem Mittelteil Spritzdüsen zum Versprühen und/oder Feinverteilen der Spritzflüssigkeit zugeordnet sind. Ebenso ist es möglich, dass dem Mittelteil ergänzend eine oder mehrere Mischkammer(n) zugeordnet ist/sind, die optional auch am Mittelgestänge angeordnet sein kann/können. Das Mittelteil kann somit ebenfalls einen eigenen Teilabschnitt des Spritzgestänges ausbilden. Alternativ können die Ausbringelemente des Mittelteils oder zumindest eine Teilmenge hiervon einer oder mehreren Mischkammern der Ausleger zugeordnet sein, so dass sich die die Ausbringelemente am Mittelteil versorgenden Ausbringleitungen von einem Fluidverteiler am Ausleger auch bis zum Mittelteil erstrecken.

Diese Unterteilung in Teilabschnitte, denen jeweils eine Mischkammer, ein Fluidverteiler und eine darüber über Teilströme versorgte Gruppe von Ausbringelemente zugeordnet ist, bietet den Vorzug, dass eine teilfächenspezifische Applikation auf kleineren Teilflächen ermöglicht wird, bei gleichzeitig reduzierten Verzögerungszeiten und verbessertem gleichmäßigen Ausbringen von Wirkstoff, insbesondere bei An- und Ausschaltvorgängen und Änderungen der Spritzflüssigkeit bzw. deren Mischung.

Die Unterteilung in Teilabschnitte erfolgt in Längsrichtung der Ausleger bzw. des Spritzgestänges und kann optional einer Unterteilung des Spritzgestänges in Teilbreiten entsprechen, was nachfolgend noch näher beschrieben ist. Die Ausleger sind jeweils in Längsrichtung der Ausleger in diese mehrere Teilabschnitte unterteilt, wobei die Teilabschnitte und die zugeordneten Mischkammern und Fluidverteiler in Längsrichtung nebeneinander angeordnet sind. Entsprechend ist eine Gruppe von Ausbringelementen, die einem Teilabschnitt zugeordnet sind, in Längsrichtung benachbart zu einer weiteren Gruppe von Ausbringelementen angeordnet, die einem benachbarten Teilabschnitt und einem anderen Fluidverteiler und (einer anderen) Mischkammer zugeordnet sind.

In einer weiteren bevorzugten Ausführungsform umfasst die Spritzvorrichtung eine erste Zufuhrleitung, über die die ersten Einlässe der Mischkammern gespeist werden und die einen sich entlang der ersten Einlässe erstreckenden und/oder entlang des Spritzgestänges geführten Abschnitt aufweist, und eine zweite Zufuhrleitung umfassen, über die die zweiten Einlässe der Mischkammern gespeist werden und die einen sich entlang der zweiten Einlässe erstreckenden und/oder entlang des Spritzgestänges geführten Abschnitt aufweist. Die erste Zufuhrleitung und/oder die zweite Zufuhrleitung kann als Ringleitung ausgeführt sein. Vorteilhaft kann eine Zirkulation der Spritzflüssigkeit realisiert werden, so dass die Spritzflüssigkeit mit der gewünschten Konzentration schnell und mit geringer Verzögerungszeit an der erforderlichen Ausbringposition am Gestänge verfügbar ist und gleichzeitig Ablagerungen vermieden werden. In der Ausführung als Ringleitung kann eine Förderpumpe in der Ringleitung vorgesehen sein. Alternativ ist auch eine Realisierung der ersten Zufuhrleitung und/oder der zweiten Zufuhrleitung als Stichleitung möglich.

In einer weiteren bevorzugten Ausführungsvariante ist der sich entlang der Einlässe der Mischkammer erstreckende und/oder entlang des Spritzgestänges geführte Abschnitt der ersten Zufuhrleitung und/oder der zweiten Zufuhrleitung so ausgeführt, dass dessen Innendurchmesser in Strömungsrichtung kleiner wird, vorzugsweise schrittweise kleiner wird.

Der Flüssigkeitsstrom innerhalb der ersten bzw. zweiten Zufuhrleitung wird schrittweise reduziert, wenn Spritzflüssigkeit hieraus zu den Einlässen der mindestens einen Mischkammer abgezweigt wird, was zu einem Druckverlust und damit reduzierter Fließgeschwindigkeit entlang der ersten bzw. zweiten Zufuhrleitung führt. Der kleiner werdende Innendurchmesser bietet den Vorzug, dass dadurch einem derartigen Druckverlust bzw. reduzierter Fließgeschwindigkeit entgegengewirkt werden kann, wodurch wiederum die Verzögerungszeiten bei der Zuführung der vermischten Spritzflüssigkeit zu den Ausbringelementen reduziert und die Ausbringqualität verbessert werden kann.

Eine schrittweise, d. h. in diskreten Schritten, erfolgende Verkleinerung des Innendurchmessers ist besonders vorteilhaft, da entsprechende Leitungsabschnitte mit genormten Innendurchmessern verwendet werden können.

In einer weiteren vorteilhaften Ausführungsform sind die Fluidverteiler und/oder die Mischkammern der Teilabschnitte jeweils am Teilabschnitt angeordnet, optional ferner mittig in Längsrichtung des Auslegers am Teilabschnitt angeordnet. Anders ausgedrückt sind die Mischkammern und/oder Fluidverteiler mittig in Längsrichtung angeordnet zu der Gruppe an Ausbringelementen, die mit dem Fluidverteiler fluidisch verbunden sind. Dies ermöglicht eine kompakte Anbringung der Ausbringleitungen am Ausleger. In einer alternativen Ausführungsform, in der jeder Ausleger nur eine Mischkammer und einen Fluidverteiler aufweist, können diese mittig in Längsrichtung am Ausleger angeordnet sein.

Unter der Längsrichtung des Auslegers wird hier die Richtung verstanden, in der sich der Ausleger erstreckt und in der die Ausbringelemente, z. B. die Spritzdüsen oder Düsenstöcke, entlang des Auslegers beabstandet zueinander angeordnet sind. Die Arbeitsbreite des Spritzgestänges ergibt sich aus der Länge des Spritzgestänges entlang dessen Längsrichtung im ausgeklappten Zustand. Unter der Vertikalrichtung der Ausleger wird die Richtung verstanden, die senkrecht zur Längsrichtung des Auslegers ist und senkrecht zu einer Fahrtrichtung der Feldspritze ist.

In einer weiteren Ausführungsform weist die Spritzvorrichtung ein erstes Dosiersystem auf. Das erste Dosiersystem umfasst einen ersten Vorratsbehälter für eine erste Spritzflüssigkeit und eine erste Dosiereinrichtung. Die erste Dosiereinrichtung ist ausgebildet, die erste Spritzflüssigkeit aus dem ersten Vorratsbehälter dosiert bereitzustellen, wobei z. B. dem ersten Einlass der mindestens einen Mischkammer die erste Spritzflüssigkeit mittels der ersten Dosiereinrichtung zuführbar ist. Hierbei kann z. B. die erste Spritzflüssigkeit aus dem ersten Vorratsbehälter mittels der ersten Dosiereinrichtung in die erste Zufuhrleitung dosiert eingebracht werden.

Die erste Dosiereinrichtung kann einen Durchflussmesser und eine Druckerzeugungseinheit, vorzugsweise eine Pumpe umfassen. Die Mischkammern sind in dieser Ausführungsform über ihren ersten Einlass an die erste Zufuhrleitung unmittelbar oder mittelbar fluidisch angeschlossen. Die Begriffe "erste" bzw. "erstes" für Dosiersystem, Spritzflüssigkeit und Dosiereinrichtung werden zur besseren Unterscheidung von optionalen weiteren Dosiersysteme, Spritzflüssigkeiten, Dosiereinrichtungen, etc. verwendet, die nachfolgend beschrieben werden.

Bei dem ersten Vorratsbehälter kann es sich um den Haupttank der Spritzvorrichtung bzw. einer Feldspritze handeln, d. h. um den Tank, der die Hauptmischung enthält. Unter Hauptmischung wird diejenige, üblicherweise bereits fertig angemischte, Spritzflüssigkeit verstanden, die zum Großteil von der Spritzvorrichtung bzw. der Feldspritze bei einem bevorstehenden Spritzvorgang verwendet werden soll und/oder die im größten Spritzflüssigkeitsvorratsbehälter der Feldspritze bevorratet ist. Die erste Spritzflüssigkeit kann jedoch auch Klarwasser oder eine andere Trägerflüssigkeit sein.

In einer Ausführungsvariante dieser Ausführungsform kann die Spritzvorrichtung ferner ein zweites Dosier- oder Versorgungssystem aufweisen, umfassend einen zweiten Vorratsbehälter für eine zweite Spritzflüssigkeit, beispielsweise Klarwasser oder auch eine andere Trägerflüssigkeit, und eine zweite Dosier- oder Fluidversorgungseinrichtung. Dieses zweite Dosier- oder Versorgungssystem dient nicht zwingend dazu, um eine exakte bzw. wohl dosierte Menge an Spritzflüssigkeit bereitzustellen, sondern könnte auch als Versorgungstank fungieren, aus dem die zweite Spritzflüssigkeit bei Bedarf bereitstellbar ist, ohne dass z. B. ein Dosierventil zur genauen Dosierung hierfür vorgesehen ist. Deswegen wurde hier der Begriff Dosier- oder Versorgungsystem bzw. Dosier- oder Fluidversorgungseinrichtung gewählt, um diesen Aspekt zu verdeutlichen. Die zweite Dosier- oder Fluidversorgungseinrichtung kann einen Durchflussmesser, ein Rückschlagventil und eine Druckerzeugungseinheit, vorzugsweise eine Pumpe, umfassen. Es ist möglich, dass die zweite Dosier- oder Versorgungseinrichtung kein Dosierventil umfasst. Der zweite Vorratsbehälter kann ein Wassertank sein.

In einer weiteren Ausführungsform umfasst die Spritzvorrichtung ferner ein drittes Dosiersystem, umfassend mindestens eine dritte Dosiereinrichtung und mindestens einen dritten Vorratsbehälter und/oder mindestens eine Behälteraufnahme zur lösbaren Halterung eines dritten Vorratsbehälters, für mindestens eine dritte Spritzflüssigkeit oder Wirkstoffmittel. Der dritte Vorratsbehälter ist bevorzugt ein Kanister und/oder die Behälteraufnahme ist bevorzugt eine Halterung für einen solchen Kanister, der dort wechselbar gehaltert werden kann. Bei der dritten Spritzflüssigkeit oder Wirkstoffmittel kann es sich um ein Pflanzenschutzmittel handeln, vorzugsweise in konzentrierter Form. Das Pflanzenschutzmittel kann ein Wachstumsregler, Fungizid, Insektizid, Pestizid und/oder dergl. in flüssiger Form sein. Denkbar ist ferner ein Granulat, das in Flüssigkeit gelöst werden kann oder ist. Das Volumen des dritten Vorratsbehälters ist bevorzugt kleiner, meist wesentlich kleiner, als das Volumen des ersten und/oder zweiten Vorratsbehälters.

Es können auch mehrere derartige dritte Behälteraufnahmen und/oder dritte Vorratsbehälter mit entsprechender dritter Dosiereinrichtung als Teil des dritten Dosiersystems vorgesehen sein, um z. B. unterschiedliche dritte Spritzflüssigkeiten, z. B. unterschiedliche Pflanzenschutzmittel mitzuführen, die bei Bedarf zugemischt werden können. Die mindestens eine dritte Dosiereinrichtung kann jeweils ein Dosierventil, einen Durchflussmesser und eine Druckerzeugungseinheit, vorzugsweise eine Pumpe, umfassen.

Es ist ferner optional möglich, dass im dritten Vorratsbehälter zusätzlich ein Rührwerk vorgesehen ist, um z. B. Anlagerungen des jeweiligen Mittels im Vorratsbehälter zu verhindern. Eine Reinigung des Spritzsystems bzw. der Dosiersysteme kann in einer aus dem Stand der Technik bekannten Art und Weise erfolgen. Alternativ oder zusätzlich kann vorgesehen sein, dass der dritte Vorratsbehälter zu Reinigungszwecken über eine zusätzliche Leitung und ein dieser Leitung zugeordnetem Ventil und/oder Pumpe wahlweise mit Klarwasser gespeist werden kann, beispielsweise mit Klarwasser aus dem ersten Dosiersystem und/oder dem zweiten Dosiersystem.

Um ein ungewolltes Vermischen der Flüssigkeiten aus den einzelnen Dosiersystemen zu verhindern, können den ersten, zweiten und dritten Dosiersystemen beispielsweise Rückschlagventile zugeordnet sein oder andere einen Flüssigkeitsfluss unterbindende Elemente zugeordnet sein.

Die Spritzvorrichtung kann ausgeführt sein, die zweite Spritzflüssigkeit mittels des zweiten Dosiersystems und/oder die dritte Spritzflüssigkeit oder Wirkstoffmittel mittels des dritten Dosiersystems dem zweiten Einlass der mindestens einen Mischkammer bei Bedarf zuzuführen, und dort mit der ersten Spritzflüssigkeit zu vermischen. Es ist denkbar, dass der mindestens einen Mischkammer für bestimmte Spritzvorgänge auch nur Spritzflüssigkeit entweder über den ersten oder über den zweiten Einlass zugeführt wird, wobei dann keine Vermischung durch die mindestens eine Mischkammer stattfindet.

Gemäß einer besonders bevorzugten Ausführungsform ist eine weitere Mischkammer vorgesehen, nachfolgend zur besseren Unterscheidung von der zuvor beschriebenen mindestens einen Mischkammer als Hauptmischkammer bezeichnet. Hierbei ist der Hauptmischkammer die zweite Spritzflüssigkeit durch die zweite Dosier- oder Fluidversorgungseinrichtung und die mindestens eine dritte Spritzflüssigkeit durch die mindestens eine dritte Dosiereinrichtung zuführbar. Die Hauptmischkammer ist stromauf zu der mindestens einen Mischkammer angeordnet, derart, dass den zweiten Einlässen der an den Auslegern angeordneten Mischkammern von der Hauptmischkammer vermischte Spritzflüssigkeit zuführbar ist, z. B. über die zweite Zufuhrleitung. Mittels der Hauptmischkammer kann eine Spritzflüssigkeit und/oder Wirkstoff des dritten Vorratsbehälters mit der zweiten Spritzflüssigkeit vermischt und/oder vorverdünnt werden. Die zweite Spritzflüssigkeit kann Wasser, z. B. Klarwasser, sein, und die dritte Spritzflüssigkeit ein Wirkstoffkonzentrat zum Pflanzenschutz sein. Entsprechend kann in der Hauptmischkammer eine Vorverdünnung des Wirkstoffkonzentrats erfolgen. Dies erleichtert das Einstellen der auszubringenden Wirkstoffkonzentration aufgrund der höheren Viskosität des Wirkstoffkonzentrats und verbessert eine nachfolgende Vermischung mit der ersten Spritzflüssigkeit in der mindestens einen Mischkammer.

Vorstehend wurde bereits festgestellt, dass die Spritzvorrichtung eine zweite Zufuhrleitung umfassen kann, über die die zweiten Einlässe der Mischkammern gespeist werden. In einer weiteren Ausführungsvariante hiervon kann die Hauptmischkammer an die zweite Zufuhrleitung direkt fluidisch angeschlossen sein. Hierbei kann zwischen der zweiten Zufuhrleitung und jeder der mindestens einen Mischkammer eine vierte Dosiereinrichtung angeordnet sein zum Steuern und/oder Regeln einer der jeweiligen Mischkammern aus der zweiten Zufuhrleitung zugeführten Menge an Spritzflüssigkeit. Die vierten Dosiereinrichtungen können jeweils einen Durchflussmesser und ein Dosierventil umfassen.

Dies bietet den Vorteil, dass die einer bestimmten Mischkammer zugeführte Spritzflüssigkeit aus der Hauptmischkammer genau eingestellt werden kann und somit die Menge des über den zweiten Einlass derjeweiligen Mischkammer eingespeisten Wirkstoffs. Eine präzise teilflächenspezifische Ausbringung einer gewünschten Wirkstoffkonzentration wird damit weiter verbessert. Die vierte Dosiereinrichtung ist beispielsweise jeweils in einem Abzweig angeordnet, der die zweite Zufuhrleitung mit derjeweiligen Mischkammer verbindet. Die zweite Zufuhrleitung ist bevorzugt als Ringleitung ausgeführt. Die Dosierventile können als pulsweitenmodulierte (PWM) Ventile ausgebildet sein, d.h. sie können mittels Pulsweitenmodulation ansteuerbar und/oder regelbar sein, was eine besonders präzise Dosierung der Spritzflüssigkeit ermöglicht.

Ferner sind folgende weitere Aspekte offenbart:
Das Ausbringelement kann eine Spritzdüse oder ein Düsenträger (auch als Düsenstock bezeichnet) sein, in dem wiederum wenigstens eine Spritzdüse angebracht ist. Die Ausbringelemente können separat ansteuerbar sein, um diese für den Spritzbetreib einzeln ein- und ausschalten zu können. Das Ausbringelement kann hierzu ein Schaltventil oder steuerbare Blende zur Steuerung des Durchflusses umfassen. Die Ausbringelemente können optional mittels Pulsweitenmodulation ansteuerbar und/oder regelbar sein. Die Ausbringelemente sind beabstandet zueinander in Längsrichtung des Spritzgestänges angebracht, beispielsweise in Abständen von beispielsweise 25 cm oder 50 cm.

Der erste Einlass der Mischkammer kann ein erster Zufluss-Anschluss für eine erste Flüssigkeitszuleitung sein. Der zweite Einlass kann ein zweiter Zufluss-Anschluss für eine zweite Flüssigkeitszuleitung sein. Die mehreren Auslässe können jeweils als Auslass-Anschlüsse für die vermischten Flüssigkeitsströme ausgebildet sein. Die Einlässe können als Einlassstutzen ausgeführt sein. Die Auslässe können als Auslassstutzen ausgeführt sein. Der erste Einlass und der eine zweite Einlass können so ausgeführt und/oder angeordnet sein, dass sich der Strömungspfad des ersten Flüssigkeitsstroms und der Strömungspfad des zweiten Flüssigkeitsstroms in der Mischkammer kreuzen, vorzugsweise im Wesentlichen senkrecht kreuzen. Dadurch wird eine besonders gute Durchmischung ermöglicht. Die mindestens eine Mischkammer und/oder die Hauptmischkammer können im Mischkammerinneren einen Turbulator, ein Rührwerk und/oder ein Ablenkelement aufweisen, um die Vermischung der eingeleiteten Flüssigkeitsströme zu verbessern.

Das Spritzgestänge kann um eine in Fahrtrichtung verlaufende Schwenkachse (A) bewegbar an einem Trägerfahrzeug mittelbar oder unmittelbar angeordnet sein. Alternativ oder zusätzlich können die zwei seitlichen Ausleger jeweils über eine vertikale Schwenkachse drehbar mit einem Mittelteil des Spritzgestänges verbunden sein.

Jeder Ausleger kann wiederum mehrere zueinander in Transportstellung einklappbare und in Arbeitsstellung ausklappbare, durch Gelenke verbundene Gestängeabschnitte aufweisen, so dass jeder der beiden Ausleger eines Spritzgestänges gefaltet, vorzugsweise mehrfach gefaltet, werden kann, indem die jeweiligen Gestängeabschnitte an den Gelenkstellen für die Transportposition um 180° eingeklappt oder für die Arbeitsposition in gestreckte Lage auseinandergefaltet werden. Im ausgeklappten Zustand erstreckt sich das Spritzgestänge quer zur Fahrtrichtung der Feldspritze. Ein Teilabschnitt gemäß der vorstehend beschriebenen Ausführungsform kann einem solchen Gestängeabschnitt oder einer Teilbreite des Auslegers bzw. des Spritzgestänges entsprechen. Aus dem Stand der Technik ist bekannt, dass Ausleger bzw. das Spritzgestänge in Teilbreiten unterteilt sein können, sodass nicht immer mit voller Arbeitsbreite gearbeitet werden muss. Die vorstehend genannten Gestängeabschnitte oder Teilbreiten des Spritzgestänges können jedoch auch jeweils mehrere der vorstehend genannten Teilabschnitte und entsprechend mehrere Mischkammern mit zugeordneten Ausbringelementen aufweisen. Hierdurch kann die Leitungslänge der Ausbringleitungen reduziert werden.

Gemäß einem weiteren Gesichtspunkt betrifft die Erfindung ferner eine landwirtschaftliche Feldspritze, umfassend eine Spritzvorrichtung, wie sie in diesem Dokument beschrieben ist. Die Feldspritze kann eine selbstfahrende oder eine mittels eines Zugfahrzeugs gezogene oder eine an ein Zugfahrzeug angebaute Feldspritze sein. Die selbstfahrende Verteilmaschine kann zudem eine autonom fahrende Landmaschine sein, beispielsweise eine vollautonom oder teilautonom fahrende Landmaschine.

Das Spritzgestänge der Spritzvorrichtung und/oder der Feldspritze weist eine hohe Arbeitsbreite auf, d. h. eine Arbeitsbreite, die wesentlich größer als eine Breite des Trägerfahrzeugs oder der Feldspritze ist, z. B. ein Vielfaches der Breite des Trägerfahrzeugs. Die Feldspritze kann in an sich bekannter Weise eine Stelleinrichtung, z. B. Pneumatik- oder Hydraulikzylinder, umfassen, mittels der eine Stellkraft erzeugbar ist, um das Verteilergestänge um die Schwenkachse zu bewegen. Zur beweglichen Halterung am Trägerfahrzeug kann das Spritzgestänge beispielsweise an einem Träger gelagert sein, der wiederum beispielsweise mit einem Aufbau- oder Rahmenabschnitt oder einer Rahmenkonstruktion des Trägerfahrzeugs und/oder mit einem starr oder beweglich gelagerten Stützabschnitt des Trägerfahrzeugs gekoppelt ist.

Am Ausleger kann jeweils mindestens ein Abstandssensor zur Messung eines Abstands zum Boden oder Pflanzenbestand angeordnet sein, z. B. in Form eines Ultraschallsensors. Die Feldspritze und/oder das Spritzgestänge kann in an sich bekannter Weise ferner mindestens eine Sensoreinrichtung zur Erfassung einer Drehlage und/oder eine Drehgeschwindigkeit und/oder eine Beschleunigung des Verteilergestänges umfassen, z. B. einen Beschleunigungssensor.

Die zuvor beschriebenen bevorzugten Ausführungsformen- und varianten und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine Perspektivansicht einer landwirtschaftlichen Feldspritze mit einem, eine Rahmenkonstruktion aufweisenden Chassis und einer Spritzeinrichtung;
- Figur 2: eine schematische Ansicht einer Spritzvorrichtung mit zwei Mischkammer-Fluidverteilereinheiten und angeschlossenen Ausbringleitungen gemäß einer weiteren Ausführungsform;
- Figur 3: ein Flüssigkeitsschema einer Spritzvorrichtung einer landwirtschaftlichen Feldspritze gemäß einer Ausführungsform;
- Figur 4A: eine schematische Ansicht einer Mischkammer-Fluidverteilereinheit mit angeschlossenen Zufuhrleitungen und Ausbringleitungen gemäß einer weiteren Ausführungsform; und
- Figur 4B: eine schematische Ansicht einer Mischkammer und eines Fluidverteilers mit angeschlossenen Zufuhrleitungen und Ausbringleitungen gemäß einer weiteren Ausführungsform;
- Figur 5: eine schematische Ansicht einer Mischkammer-Fluidverteilereinheit mit angeschlossenen Zufuhrleitungen und Ausbringleitungen mit Verzweigungsstelle gemäß einer weiteren Ausführungsform;
- Figur 6: eine schematische Ansicht einer Zufuhrleitung mit schrittweise kleiner werdendem Innendurchmesser gemäß einer weiteren Ausführungsform;
- Figur 7A: eine perspektivische Ansicht einer Mischkammer der Spritzvorrichtung gemäß einer Ausführungsform der Erfindung;
- Figur 7B: eine Draufsicht im Schnitt der Mischkammer aus Figur 7A;
- Figur 7C: eine Seitenansicht im Schnitt der Mischkammer aus Figur 7A; und
- Figur 8: zeigt die Ausführungsform der Figur 3 mit Signal- und Befehlsübertragungselementen.

Gleiche oder funktional äquivalente Elemente sind in den Figuren zum Teil mit denselben Bezugszeichen bezeichnet und zum Teil nicht gesondert beschrieben.

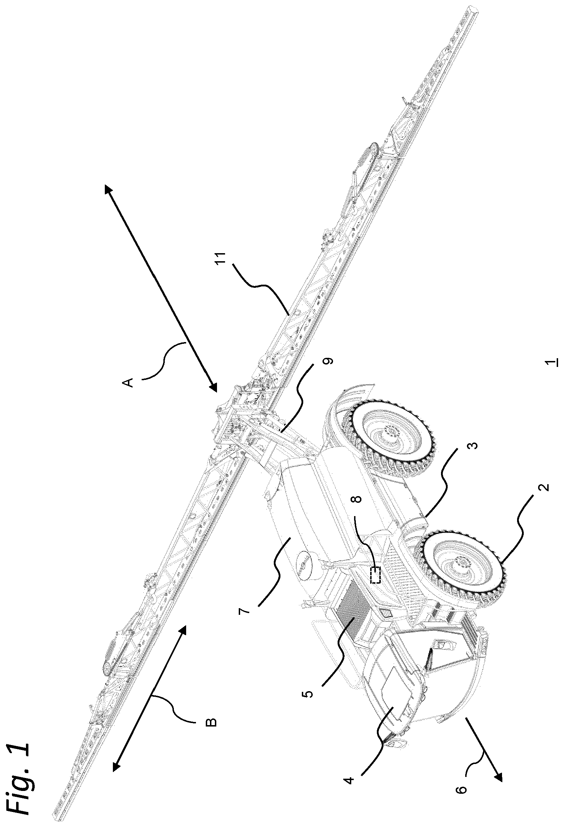

Figur 1 zeigt in einer Perspektivansicht eine Ausführungsvariante einer landwirtschaftlichen Feldspritze 1 mit einem, eine Rahmenkonstruktion aufweisenden Chassis 3, wobei das Chassis 3 zudem ein Fahrwerk 2 aufweist. Die Feldspritze 1 ist hier beispielhaft als eine selbstfahrende Feldspritze ausgeführt und umfasst eine Kabine 4, mit einem Bedienstand für eine Bedienperson und eine Antriebseinrichtung 5 (z.B. Motor). Im hinteren Bereich umfasst die Feldspritze 1 ein sich in einer Arbeitsstellung befindende und sich in großer Arbeitsbreite, z. B. 24 Meter oder mehr, quer zur Fahrtrichtung 6 erstreckendes Spritzgestänge 11, das um eine sich in Fahrtrichtung erstreckende Schwenkachse A mittels einer Stelleinrichtung verschwenkbar ist. Das Spritzgestänge 11, auch als Spritzbalkenanordnung bezeichnet, ist mittels eines höhenverstellbaren Parallelogrammgestänges 9 höhenverstellbar gegenüber dem Chassis 3. Am Chassis 3 ist zudem eine erfindungsgemäße Spritzvorrichtung angebaut, wobei in der Figur 1 hiervon lediglich das Spritzgestänge 11 und ein Vorratstank 7 von mehreren Vorratstanks dargestellt sind. Das Spritzgestänge ist um eine in Fahrtrichtung A weisende Achse schwenkbare und umfasst ein Mittelteil und zwei seitliche Ausleger, die jeweils eine Mehrzahl von Ausbringelementen zum Versprühen und/oder Feinverteilen der Spritzflüssigkeit aufweisen. Ferner ist eine Steuereinrichtung 8 vorgesehen, die in Signalverbindung mit den einzelnen Komponenten der Spritzvorrichtung steht, wie den Ausbringelemente, Pumpen, Ventilen, Durchflussmessern, um diese zur Ausbringung von Spritzflüssigkeit entsprechend zweckmäßig anzusteuern.

Die Spritzvorrichtung umfasst ferner mehrere Mischkammern 20 (in Figur 1 nicht dargestellt) zum Vermischen von Spritzflüssigkeiten. Die Mischkammern 20 sind bevorzugt Mischkammern 20 eines Direkteinspeisesystems der Spritzvorrichtung.

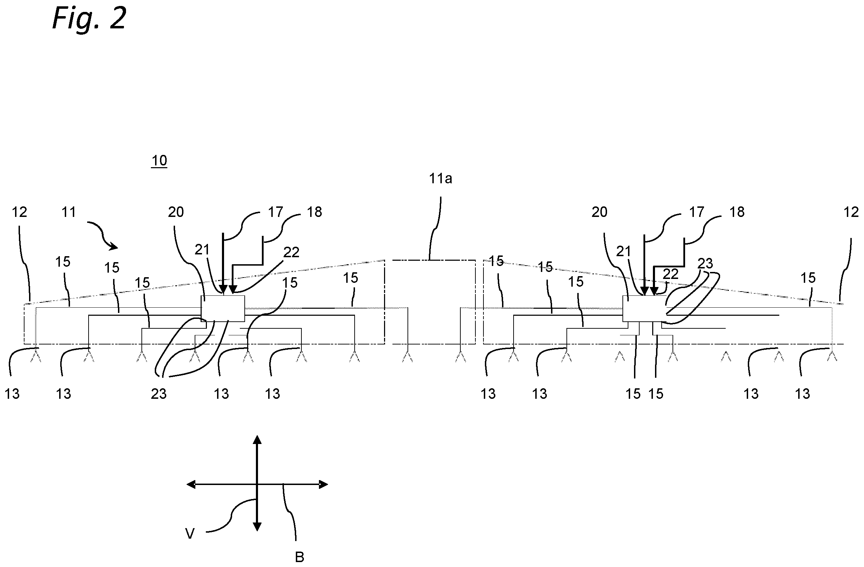

Figur 2 zeigt eine schematische Ansicht einer Spritzvorrichtung 10 mit zwei Mischkammer-Fluidverteilereinheiten 20 und angeschlossenen Ausbringleitungen 15 gemäß einer Ausführungsform.

Die Spritzvorrichtung 10 dient zum dosierten Ausbringen von Spritzflüssigkeit auf landwirtschaftlichen Nutzflächen. Die in Figur 2 dargestellte Spritzvorrichtung 10 ist für eine Feldspritze ausgeführt, die eine kleinere Arbeitsbreite aufweist als die in Figur 1 gezeigte Feldspritze 1. Die Spritzvorrichtung 10 umfasst das schwenkbare Spritzgestänge 11, welches zwei seitliche Ausleger 12 aufweist, die jeweils eine Mehrzahl von Ausbringelementen 13 zum Versprühen und/oder Feinverteilen der Spritzflüssigkeit aufweisen. Die Ausbringelemente 13 erzeugen einen zum Boden bzw. zum Pflanzenbestand hin ausgerichteten Sprühkegel zum gewünschten Verteilen des Wirkstoffes. Das Ausbringelement 13 kann eine Spritzdüse oder ein Düsenträger sein, in dem wiederum wenigstens eine Spritzdüse angebracht ist. Die Ausbringelemente 13 sind in Figur 2 nur schematisch anhand des von ihnen erzeugten Sprühkegels (könnte auch sog. Spritzfächer sein) dargestellt. Die Längsrichtung des Spritzgestänges 11 bzw. der Ausleger 12 ist durch den Pfeil B gekennzeichnet, die Vertikalrichtung des Spritzgestänges 11 bzw. der Ausleger 12 durch den Pfeil V. Die zwei seitlichen Ausleger 12 sind jeweils über eine in Fahrtrichtung verlaufende Schwenkachse A drehbar mit einem Mittelteil 11a des Spritzgestänges 11 verbunden.

An jedem Ausleger 12 ist eine kombinierte Mischkammer-Fluidverteilereinheit 20 angeordnet. Die Mischkammer-Fluidverteilereinheiten 20 umfassen jeweils einen ersten Einlass 21 zum Einlassen eines ersten Flüssigkeitsstroms, einen zweiten Einlass 22 zum Einlassen eines zweiten Flüssigkeitsstroms und mehrere Auslässe (Verteilerauslässe) 23 zum Auslassen des vermischten Flüssigkeitsstroms als mehrere Teilströme 23a. Die Mischkammer und der Fluidverteiler sind hier als bauliche Einheit ausgeführt.

Die Mischkammer-Fluidverteilereinheit 20 entspricht einer Mischkammer mit integriertem Fluidverteiler zum Vermischen zweier Spritzflüssigkeiten und zum Verteilen bzw. Aufteilen der vermischten Spritzflüssigkeiten auf mehrere Teilströme, die über die Verteilerauslässe 23 als hydraulisch parallele Teilströme ausgeleitet werden. Die Einrichtung hat somit zwei Funktionen, nämlich das Vermischen von zugeführten Spritzflüssigkeiten und das anschließende Verteilen, was auch als Aufteilen oder Verzweigen bezeichnet werden kann, der vermischten Spritzflüssigkeit auf mehrere Teilströme.

Den Mischkammern-Fluidverteilereinheiten 20 werden über Zufuhrleitungen 17, 18 die beiden zu vermischenden Spritzflüssigkeiten zugeleitet. Die Zufuhrleitungen sind somit an die Einlässe 21, 22 angeschlossen. An die zuvor beschriebenen Auslässe (Verteilerauslässe) 23 sind jeweils Ausbringleitungen 15 angeschlossen.

Hierbei ist jedes der Ausbringelemente 13 über eine separate Ausbringleitung 15 mit einem der Verteilerauslässe 23 fluidisch verbunden. Der besseren Übersichtlichkeit wegen ist nicht jedes Ausbringelement 13, nicht jede Ausbringleitung 15 und nicht jeder Verteilerauslass 23 gesondert mit einem Bezugszeichen gekennzeichnet. In dem gezeigten Beispiel sind jedoch insgesamt 16 in Längsrichtung B des Spritzgestänges 11 gleichmäßig beabstandet angeordnete Ausbringelemente 13 dargestellt, denen jeweils über eine eigene Ausbringleitung 15 Spritzflüssigkeit zugeführt wird. Entsprechend weist jede Mischkammer-Fluidverteilereinheit 20 in diesem Beispiel acht Verteilerauslässe 23 auf und an jede Mischkammer-Fluidverteilereinheit 20 sind entsprechend acht Ausbringleitungen 15 angeschlossen. Die Anzahl an Mischkammern, Verteilerauslässen, Ausbringelementen und Ausbringleitungen ist hier nur beispielhaft. Bei Spritzgestängen mit größeren Arbeitsbreiten können entsprechend mehrere Mischkammern pro Ausleger und eine höhere Anzahl von Ausbringelementen und Ausbringleitungen vorgesehen sein und/oder die Anzahl von Verteilerauslässen pro Mischkammer-Fluidverteilereinheit variiert werden.

Die Spritzvorrichtung 10 umfasst ferner zwei oder mehr Vorratstanks oder Vorratsbehälter (in Figur 2 nicht dargestellt) für Spritzflüssigkeit, z. B. Wasser, Pflanzenschutzmittel, Dünger und/oder dergl.

Um die Spritzflüssigkeit von den Vorratstanks oder Vorratsbehältern mit einem Förderdruck in Richtung der mindestens einen Mischkammer-Fluidverteilereinheit 20 zu fördern, umfasst die Spritzvorrichtung 10 z. B. eine oder mehrere Pumpen (z.B. Kolbenpumpen, Kreiselpumpen oder dergl.), entsprechende Flüssigkeitsleitungen und/oder Kreisläufe, sowie steuerbare Ventileinheiten, Durchflussmesser, etc. Diese können in an sich bekannter und unterschiedlicher Weise ausgeführt sein. Der Aufbau der Spritzvorrichtung bzw. der Flüssigkeitsplan stromauf zu den Mischkammer-Fluidverteilereinheiten 20 ist daher hier bis auf die Zufuhrleitungen 17, 18 nicht näher dargestellt.

Die Mischkammer-Fluidverteilereinheit 20 vermischt zwei dieser zugeführten Spritzflüssigkeitsströme und verzweigt den im Mischkammerinneren entstehenden vermischten Spritzflüssigkeitsstrom in Teilströme und gibt diese über die Verteilerauslässe 23 aus. Diese Teilströme werden dann über die Ausbringleitungen 15 auf getrennten Teilströmungswegen von der Mischkammer-Fluidverteilereinheit 20 zu den jeweiligen Ausbringelementen 13 gefördert. Das Vorsehen separater Ausbringleitungen 15 anstatt einer herkömmlichen Düsenleitung, die mehrere Ausbringelemente nacheinander speist, bietet den Vorzug, dass diese Ausbringleitungen 15 mit kleinerem Durchmesser ausgeführt werden können, da diese nur eine Teilmenge der Spritzflüssigkeit, nämlich nur die Spritzflüssigkeit, die über ein einzelnes Ausbringelement 13 ausgebracht wird, fördern müssen. Entsprechend schneller ist die Strömungsgeschwindigkeit in den einzelnen Ausbringleitungen 15 im Vergleich zu einem Düsenrohr, so dass insgesamt eine schnellere Reaktionszeit erzielt werden kann.

Diese Ausbringleitungen 15 sind hier als Schlauchleitungen und/oder als flexible Leitungen ausgeführt, die einen nicht-geraden (gekrümmten) Verlauf aufweisen. Die Ausbringleitungen 15 sind so dimensioniert, dass es auf dem Weg vom Verteilerauslass 23 zum jeweiligen Ausbringelement 13 zu einem Druckabfall von jeweils maximal 1 bar kommt und der Zeitverzug der Teilströme für ihren Strömungsweg von der Mischkammer-Fluidverteilereinheit 20 bis zum Erreichen der jeweiligen Ausbringelemente 13 jeweils maximal fünf Sekunden ist. Die Mischkammer-Fluidverteilereinheiten 20 sind hier mittig in Längsrichtung B jeweils eines der Ausleger 12 angeordnet.

Vorstehend wurde bereits angemerkt, dass in Figur 2 ein Spritzgestänge 11 mit kleiner Arbeitsbreite dargestellt ist. In einer weiteren Ausführungsform (nicht dargestellt), die für größere Arbeitsbreiten, wie z. B. für das in Figur 1 gezeigte Spritzgestänge 11 vorteilhaft ist, ist jeder Ausleger in mehrere Teilabschnitte unterteilt, wobei an jedem Teilabschnitt eine Mehrzahl von Ausbringelementen angeordnet ist und jedes Ausbringelement genau einem Teilabschnitt zugeordnet ist. In dieser Ausführungsform weist jeder Ausleger mehrere Mischkammer-Fluidverteilereinheiten 20 auf, derart, dass an jedem Teilabschnitt eine Mischkammer-Fluidverteilereinheit 20 angeordnet ist und die dem jeweiligen Teilabschnitt zugeordneten Ausbringelemente mit der Mischkammer-Fluidverteilereinheit 20 dieses Teilabschnitts über entsprechende Ausbringleitungen verbunden sind. So kann jeder der Ausleger 12 zwei, drei, vier oder mehr Mischkammer-Fluidverteilereinheiten 20 aufweisen, die in Längsrichtung B des Auslegers 12 beabstandet voneinander längs des Auslegers an diesem angeordnet sind. Entsprechend ist eine Gruppe von Ausbringelementen, die bestimmten Teilabschnitten und der Mischkammer-Fluidverteilereinheit 20 zugeordnet sind, in Längsrichtung benachbart zu einer weiteren Gruppe von Ausbringelementen angeordnet, die einem benachbarten Teilabschnitt und einer benachbarten Mischkammer-Fluidverteilereinheit zugeordnet sind.

Hierzu kann jeder Ausleger 12 mehrere zueinander in Transportstellung einklappbare und in Arbeitsstellung ausklappbare, durch Gelenke verbundene Gestängeabschnitte aufweisen, so dass jeder der beiden Ausleger eines Spritzgestänges mehrfach gefaltet werden kann, indem die jeweiligen Gestängeabschnitte an den Gelenkstellen für die Transportposition um 180° eingeklappt oder für die Arbeitsposition in gestreckte Lage auseinandergefaltet werden. Im ausgeklappten Zustand erstreckt sich das Spritzgestänge quer zur Fahrtrichtung der Feldspritze.

Die vorgenannte Unterteilung in Teilabschnitte kann dieser Unterteilung in relativ zueinander beweglichen Gestängeabschnitten entsprechen. Alternativ kann jeder dieser Gestängeabschnitte mehrere, also mindestens zwei, Teilabschnitte aufweisen, so dass in dem Gestängeabschnitt mindestens zwei Mischkammer-Fluidverteilereinheiten mit zugeordneten Ausbringelementen angeordnet sind. Hierdurch kann die Leitungslänge der Ausbringleitungen reduziert werden. Auch die am Mitteilteil angeordneten Ausbringelemente 13 können einem Teilabschnitt entsprechen oder, wie in Figur 2 gezeigt, Teilabschnitten zugeordnet sein.

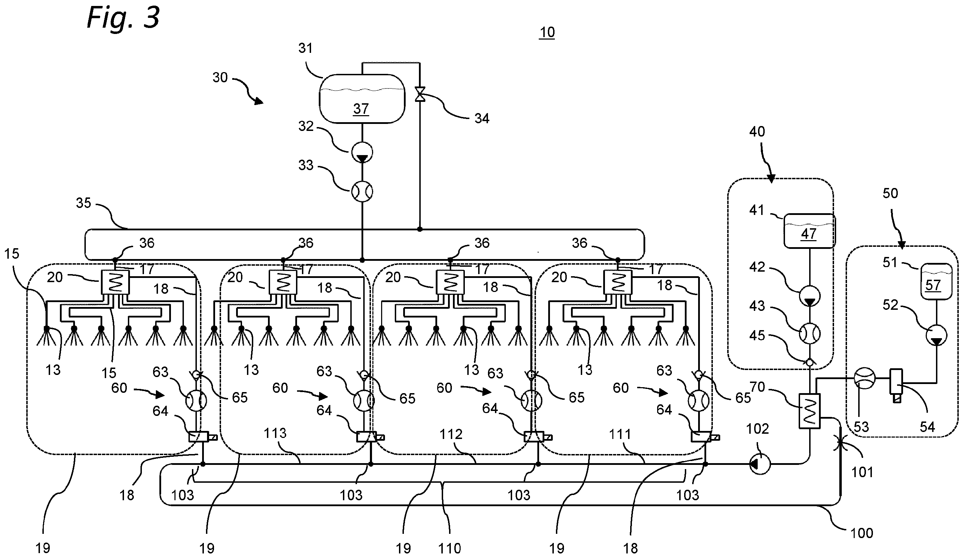

Es ist besonders vorteilhaft, die Ausbringleitungen 15 so auszuführen, dass sie gleich lang sind, so dass der Strömungsweg vom Verteilerauslass 23 bis zum jeweiligen Ausbringelement 13 für alle Ausbringleitungen 15 gleich lang ist. Differenzen im Zeitverzug, bis Spritzflüssigkeit den Strömungsweg vom Verteilerauslass bis zu den Ausbringelementen zurückgelegt hat, können so vermieden werden. Eine solche Ausführungsform mit gleich langen Ausbringleitungen ist in Figur 3 gezeigt.

Figur 3 zeigt ein Flüssigkeitsschema einer Spritzvorrichtung einer landwirtschaftlichen Feldspritze gemäß einer weiteren Ausführungsform. Das Spritzgestänge und die Ausleger sind in dem Flüssigkeitsplan der Figur 3 nicht dargestellt.

Bei der in Figur 3 gezeigten Spritzvorrichtung 10 ist das Spritzgestänge 12 (im Flüssigkeitsschema der Figur 3 nicht dargestellt) wiederum, wie zuvor beschrieben, in mehrere Teilabschnitte 19 unterteilt. Hier sind es beispielhaft vier Teilabschnitte 19. Hierbei sind an jedem Teilabschnitt 19 eine Mehrzahl von Ausbringelementen 13 angeordnet und jedes Ausbringelement 13 ist genau einem Teilabschnitt 19 zugeordnet. Hierbei sind an jedem Ausleger zwei der Fluidverteiler und Mischkammern angeordnet, die hier beispielhaft als kombinierte Mischkammer-Fluidverteilereinheit 20 ausgeführt sind und jeweils einem der Teilabschnitte 19 zugeordnet sind. Die von der Mischkammer-Fluidverteilereinheit 20 vermischte Spritzflüssigkeit wird in Form mehrerer hydraulisch paralleler Teilströme über die Verteilerauslässe der Mischkammer-Fluidverteilereinheit 20, an die die Ausbringleitungen 15 zur Versorgung der Ausbringelemente 13 angeschlossen sind, ausgeleitet.

Die Besonderheit dieser Ausführungsform liegt ferner darin, dass mehrere unterschiedliche Dosiereinrichtungen vorhanden sind, um eine flexible Direkteinspeisung mit teilflächenspezifischer Applikation zu ermöglichen.

Die Spritzvorrichtung 10 umfasst ein erstes Dosiersystem 30, mit einem ersten Vorratsbehälter 31 für eine erste Spritzflüssigkeit 37 und einer ersten Dosiereinrichtung 32, 33. Der erste Vorratsbehälter kann z. B. der Tank 7 aus Figur 1 sein. Bei dem ersten Vorratsbehälter 31 handelt es sich um den Haupttank für eine erste vorgemischte Spritzflüssigkeit, z. B. eine Hauptmischung an Spritzflüssigkeit. Das ist diejenige Mischung, die zum Großteil bei einem bevorstehenden Spritzvorgang ausgebracht werden soll. An dem ersten Vorratsbehälter kann ferner ein Anschluss für bzw. eine Kopplung mit beispielsweise einer Einspülschleuse vorgesehen sein (nicht dargestellt), um den Haupttank entsprechend befüllen zu können.

Die erste Dosiereinrichtung umfasst hier einen Durchflussmesser 33 und eine Druckerzeugungseinheit, hier z. B. eine Pumpe 32, zur Förderung der ersten Spritzflüssigkeit 37. Alternativ zur Pumpe 32 wäre es auch denkbar, dass der Förderdruck mittels eines Kompressors erzeugt wird, welcher bspw. wirkungstechnisch mit dem ersten Vorratsbehälter 31 verbunden ist.

Die Mischkammer-Fluidverteilereinheiten 20 sind eingangsseitig jeweils über die Leitungen 17 an eine erste Zufuhrleitung 35 fluidisch angeschlossen, der die erste Spritzflüssigkeit 37 mittels der ersten Dosiereinrichtung 32, 33 aus dem ersten Vorratsbehälter 31 zuführbar ist. Die erste Zufuhrleitung 35 ist hier als Ringleitung bzw. Zirkulationsleitung ausgeführt, die einen sich in Längsrichtung des Spritzgestänges 11 erstreckenden und entlang des Spritzgestänges 11 geführten Abschnitt aufweist, an dem korrespondierend zu den Mischkammer-Fluidverteilereinheiten 20 mehrere Abzweigstellen 36 vorgesehen sind. Eine Ausführung als Stichleitung wäre auch möglich. An einer Abzweigstelle 36 wird für jeweils eine der Mischkammer-Fluidverteilereinheiten 20 Spritzflüssigkeit 37 mittels der Leitungen 17 abgezweigt. In der ersten Zufuhrleitung 35 ist ein Zirkulationsventil 34 angeordnet. Dieses wird von der Steuereinrichtung 8 so angesteuert, dass es geschlossen ist, wenn die Spritzdüsen 13 geöffnet sind, um einen ausreichenden Spritzdruck zu erzeugen, und es geöffnet ist, wenn die Spritzdüsen 13 geschlossen sind, um somit beispielsweise Ablagerungen im System zu verhindern.

Die Spritzvorrichtung 10 umfasst ferner ein zweites Dosier- oder Versorgungssystem 40, umfassend einen zweiten Vorratsbehälter 41 für eine zweite Spritzflüssigkeit 47 und eine zweite Dosier- oder Fluidversorgungseinrichtung 42, 43. Bei der zweiten Spritzflüssigkeit 47 handelt es sich hier beispielsweise um Frischwasser (Klarwasser) und der zweite Vorratsbehälter 41 ist ein Wassertank, wobei auch eine andere Trägerflüssigkeit für einen Wirkstoff verwendet werden kann.

Die zweite Dosier- oder Fluidversorgungseinrichtung umfasst einen Durchflussmesser 43 und eine Druckerzeugungseinheit, vorzugsweise in Form einer Pumpe 42 (Ladepumpe zur Flüssigkeitsförderung). Die Pumpe 42 könnte auch ersetzt werden, indem der Vorratsbehälter 41 gezielt mit Überdruck beaufschlagt wird, z. B. mithilfe eines Kompressors. Stromab der Pumpe 42 ist ein Rückschlagventil 45 angeordnet, was dazu dient, ein ungewolltes Vermischen des Frischwassers mit Pflanzenschutzmittel des nachfolgend beschriebenen dritten Dosiersystems 50 zu verhindern. Diese zweite Dosier- oder Versorgungssystem 40 dient nicht zwingend dazu, um eine exakte bzw. wohl dosierte Menge an Spritzflüssigkeit bereitzustellen, sondern erzeugt im Wesentlichen nur Druck zur Bereitstellung von Frischwasser 47. Eine exakte Mengenregelung wie in dem ersten oder dritten Dosiersystems 30, 50 ist hier nicht vorgesehen, wäre jedoch möglich. Ein Dosierventil ist entsprechend nicht vorgesehen, wäre aber zur Erhöhung der Dosiergenauigkeit möglich.

Die Spritzvorrichtung 10 umfasst ferner ein drittes Dosiersystem 50, umfassend mindestens eine dritte Dosiereinrichtung 52, 53, 54 und mindestens einen dritten Vorratsbehälter 51 und/oder mindestens eine Behälteraufnahme zur lösbaren Halterung eines dritten Vorratsbehälters 51. Die dritte Spritzflüssigkeit ist hier ein Pflanzenschutzmittel, beispielsweise ein Wachstumsregler, Fungizid, Insektizid, Pestizid und/oder dergl. Der dritte Vorratsbehälter kann ein Kanister sein. Das dritte Dosiersystem 50 kann eine Behälteraufnahme umfassen, die an der Feldspritze vorgesehen ist, um den Kanister als Wechselbehälter lösbar zu haltern. Die dritte Dosiereinrichtung umfasst ein Dosierventil 54, einen Durchflussmesser 53 und eine Druckerzeugungseinheit, vorzugsweise wieder ausgebildet als eine Pumpe 52. Es können mehrere derartige dritte Vorratsbehälter bzw. Behälteraufnahmen und mehrere zugeordnete dritte Dosiereinrichtungen vorgesehen sein, je nachdem wie viele unterschiedliche dritte Spritzflüssigkeiten, beispielsweise wie viele unterschiedliche Pflanzenschutzmittel, per Direkteinspeisung ausgebracht werden sollen.

Die Spritzvorrichtung des Ausführungsbeispiels der Figur 3 umfasst ferner eine weitere Mischkammer 80, hier als Hauptmischkammer bezeichnet. Der Hauptmischkammer 70 ist die zweite Spritzflüssigkeit 47 durch die zweite Dosier- oder Fluidversorgungseinrichtung 42, 43 über eine Zufuhrleitung des zweiten Dosiersystems 40 und die mindestens eine dritte Spritzflüssigkeit 57 durch die mindestens eine dritte Dosiereinrichtung 52, 53, 54 über eine oder mehrere entsprechende Zufuhrleitung des dritten Dosiersystems 50 eingangsseitig zuführbar. Ausgangsseitig ist die Hauptmischkammer 70 an eine zweite Zufuhrleitung 100 angeschlossen, um die durch die Hauptmischkammer 70 erzeugte Spritzflüssigkeitsmischung den Mischkammer-Fluidverteilereinheiten 20, insbesondere deren zweiten Einlässen, zuzuleiten. In dem vorliegenden Beispiel ist die zweite Zufuhrleitung 100 als Zirkulationsleitung bzw. Ringleitung ausgeführt, in der ferner eine Pumpe (Förderpumpe) 102 und ein Drosselventil 101 angeordnet ist. Die Hauptmischkammer 70 ist ausgebildet, die ihr über das aus dem zweiten Dosier- oder Versorgungssystem 40 und dem dritten Dosiersystem 50 zugeführten zweiten und dritten Spritzflüssigkeiten 47, 57 zu vermischen, vorzugsweise homogen zu vermischen, und anschließend die vermischte Spritzflüssigkeit in die zweite Ringleitung 100 auszuleiten.

Die zweite Zirkulationsleitung (Ringleitung) 100 umfasst einen sich in Längsrichtung des Spritzgestänges 11 erstreckenden und entlang des Spritzgestänges 11 geführten Abschnitt 110, der mehrere Abzweigstellen 103 für Abzweige 18 zur Versorgung jeweils eines Teilabschnitts 19 und eines Teils der Ausbringelemente 13 mit Spritzflüssigkeit aufweist. Diese Abzweige 18 sind somit Leitungen, die jeweils eine Abzweigstelle 103 der zweiten Zirkulationsleitung 100 mit dem zweiten Einlass einer der Mischkammer-Fluidverteilereinheiten 20 fluidisch verbinden.

Die Mischkammer-Fluidverteilereinheiten 20 sind somit eingangsseitig einerseits über ihren ersten Einlass an die erste Zirkulationsleitung 35 fluidisch angeschlossen und andererseits über ihren zweiten Einlass jeweils an einen der Abzweige 18 der zweiten Zirkulationsleitung 100 fluidisch angeschlossen.

Die aus der Hauptmischkammer 70 in die zweite Zirkulationsleitung 100 einfließende Spritzflüssigkeit wird mittels der Pumpe 102 in Richtung der Abzweigstellen 103 gefördert. Der Anteil der Spritzflüssigkeit, der nicht über die Abzweige 18 den Mischkammer-Fluidverteilereinheiten 20 zugeleitet wurde, strömt im Zirkulationsbetrieb über die zweite Zirkulationsleitung 100 zurück in Richtung Drosselventil 101 und kann bei aktivierter Pumpe 102 über die Hauptmischkammer 70 weiter in der zweiten Zirkulationsleitung 100 zirkulieren. Die Spritzflüssigkeit wird somit in der zweiten Ringleitung 100 zirkuliert, um somit die richtige / gewünschte Flüssigkeit, d.h. die Flüssigkeit mit der richtigen / gewünschten Konzentration möglichst schnell, d.h. ohne Verzögerungszeit, an der erforderlichen Position des Spritzgestänges zur Verfügung zu haben.

Die Spritzvorrichtung 10 weist ferner jeweils in den Abzweigen 18 angeordnete vierte Dosiereinrichtungen 60 auf, umfassend jeweils einen Durchflussmesser 63 und ein Dosierventil 64. Diese vierten Dosiereinrichtungen 60 dienen zum Steuern und/oder Regeln einer der jeweiligen zugeordneten Mischkammer-Fluidverteilereinheiten 20 aus der zweiten Zufuhrleitung 100 zugeführten Menge an zweiter und/oder dritter Spritzflüssigkeit, die zuvor in der Hauptmischkammer 70 vermischt wurden. Hierzu steht die Steuereinrichtung 8 in Signalverbindung mit den Durchflussmessern 63 und dem Dosierventilen 64 und steuert letztere entsprechend an. Das Drosselventil 101 ist stromab zu den Abzweigstellen 103 angeordnet, bevor die zweite Zufuhrleitung 100 wieder in die Hauptmischkammer 70 mündet. Die vierten Dosiereinrichtungen 60 dienen dazu, bei Bedarf Durchflussdifferenzen zwischen einzelnen Abzweigen 18 auszugleichen und/oder den jeweiligen Mischkammer-Fluidverteilereinheiten 20 nur die jeweils für die teilflächenspezifische Applikation erforderliche Menge an zweiter und/oder dritter Spritzflüssigkeit 47, 57 zuzuführen.

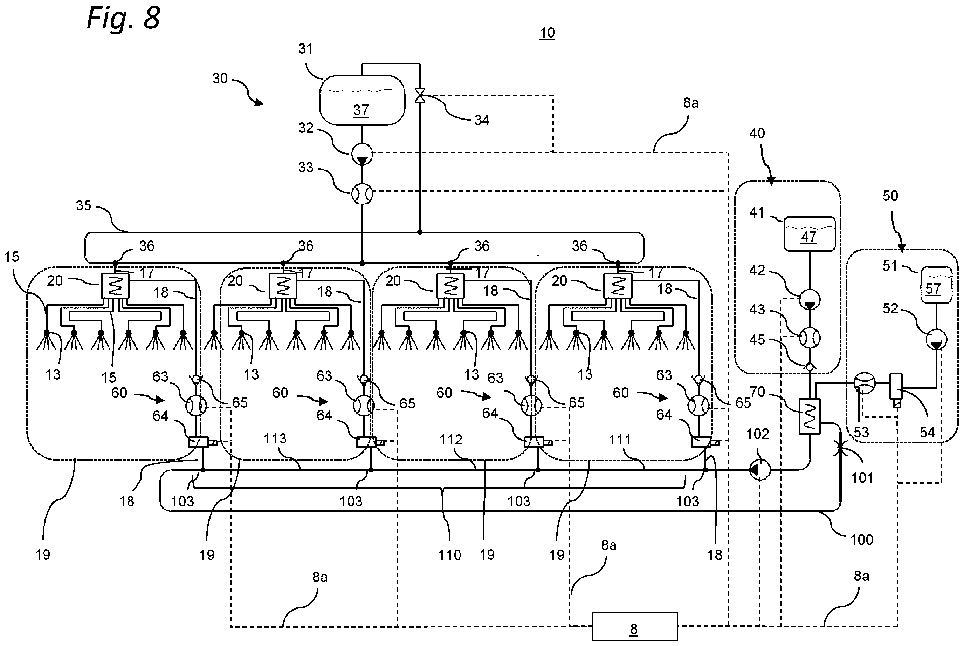

Zur Realisierung einer teilflächenspezifischen Applikation von Spritzflüssigkeit ist die Steuereinrichtung 8 ausgebildet, wahlweise allen Ausbringelementen 13 oder nur Ausbringelementen 13 ausgewählter Teilabschnitte 19 durch Ansteuerung der ersten Dosiereinrichtung 32, 33, der zweiten Dosier- oder Fluidversorgungseinrichtung 42, 43 und der mindestens einen dritten Dosiereinrichtung 52, 53, 54 und der vierten Dosiereinrichtungen 60, wahlweise eine Mischung aus zumindest zwei der Spritzflüssigkeiten 37, 47, 57 in einem festlegbaren Mischungsverhältnis oder nur eine der Spritzflüssigkeit zuzuführen. Dies wird nachfolgend in Zusammenhang mit Figur 8 noch detaillierter erläutert.

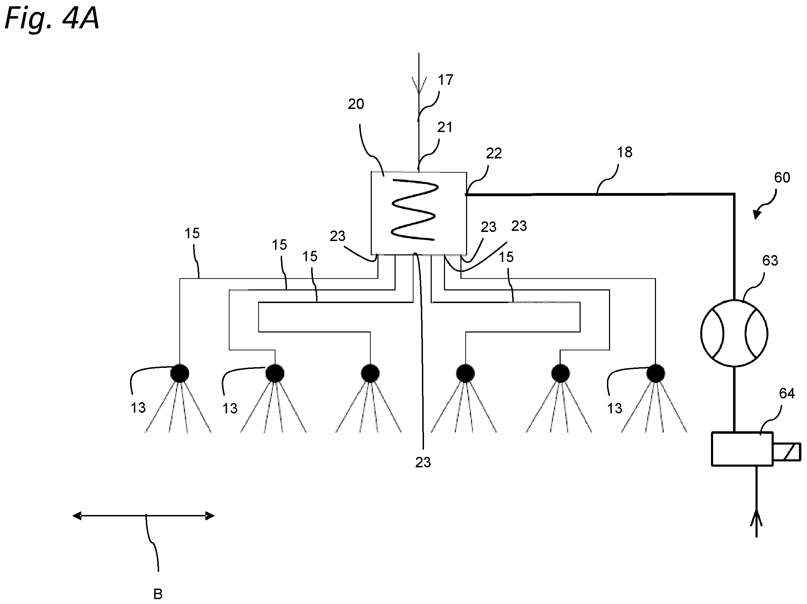

Figur 4A zeigt eine schematische Ansicht einer Mischkammer-Fluidverteilereinheit mit angeschlossenen Zufuhrleitungen und Ausbringleitungen gemäß einer weiteren Ausführungsform.

In Figur 4A ist ebenfalls eine Ausführungsform gezeigt, bei der die Ausbringleitungen 15 die gleiche Länge und den gleichen Durchmesser aufweisen, so dass der Strömungsweg vom Verteilerauslass 23 bis zum jeweiligen Ausbringelement 13 für alle Ausbringleitungen 15 gleich lang ist. Differenzen im Zeitverzug, bis Spritzflüssigkeit den Strömungsweg vom Verteilerauslass bis zu den Ausbringelementen zurückgelegt hat, können so vermieden werden. Zur Verdeutlichung dieses Aspekts ist nur eine einzige Mischkammer-Fluidverteilereinheit 20 mit zugeordneten Ausbringleitungen 15 und Ausbringelementen 13 dargestellt, sowie mit einer Dosiereinrichtung 60 für eine der Zufuhrleitungen. Die anderen (nicht dargestellten) Mischkammer-Fluidverteilereinheiten 20 und Elemente der Spritzvorrichtung 10 und des Spritzgestänges 11 können wie zuvor beschrieben ausgeführt sein.

Am ersten Einlass 21 der Mischkammer-Fluidverteilereinheit 20 ist wiederum eine erste Zufuhrleitung 17 angeschlossen, um der Mischkammer-Fluidverteilereinheit 20 eine erste Spritzflüssigkeit, z. B. eine Hauptmischung aus einem Haupttank der Feldspritze, zuzuführen. Am zweiten Einlass 22 der Mischkammer-Fluidverteilereinheit 20 ist eine zweite Zufuhrleitung 18 angeschlossen, um der Mischkammer-Fluidverteilereinheit 20 eine zweite Spritzflüssigkeit, z. B. ein vorverdünntes Pflanzenschutzmittel aus einem weiteren Vorratsbehälter, z. B. einem Kanister, zuzuführen. Ferner ist eine Dosiereinrichtung 60, umfassend einen Durchflussmesser 63 sowie ein Dosierventil 64 gezeigt, um die in die Mischkammer-Fluidverteilereinheit 20 eingebrachte Menge der zweiten Spritzflüssigkeit je nach Bedarf dosieren zu können. Um eine teilflächenspezifische Applikation zu ermöglichen, kann das Dosiersystem 60 beispielsweise bei Bedarf so von der Steuereinrichtung 8 angesteuert werden, dass der Mischkammer-Fluidverteilereinheit 20 z. B. zusätzlich zum über die Leitung 17 zugeleiteten Hauptgemisch ein Pflanzenschutzmittel über die Leitung 18 zudosiert und mit dem Hauptgemisch in der Mischkammer-Fluidverteilereinheit 20 vermischt wird. Das Pflanzenschutzmittel kann z. B. selektiv nur einer Mischkammer-Fluidverteilereinheit 20 oder einer Teilmenge der Mischkammer-Fluidverteilereinheiten 20 des Spritzgestänges zugeführt werden, so dass nur über diejenigen Ausbringelemente 13, die stromab zu dieser einen Mischkammer-Fluidverteilereinheit 20 oder dieser Teilmenge von Mischkammern 20 angeordnet sind, das Pflanzenschutzmittel zur teilfächenspezifischen Applikation ausgebracht wird.

In dem gezeigten Beispiel sind der Mischkammer-Fluidverteilereinheit 20 lediglich beispielhaft sechs Ausbringelemente 13 zugeordnet und über entsprechende Ausbringleitungen 15 an der Mischkammer-Fluidverteilereinheit 20 angeschlossen. Obwohl die räumlichen Abstände der einzelnen Ausbringelemente 13 zum Verteilerauslass 23 der Mischkammer-Fluidverteilereinheit 20, über die sie gespeist werden, zum Teil stark unterschiedlich sind, sind alle sechs Ausbringleitungen 15 gleich lang und weisen denselben Durchmesser auf. Folglich weisen alle Ausbringleitungen 15 den gleichen Druckabfall und den gleichen Zeitverzug auf, bis Spritzflüssigkeit die Ausbringelemente 13 erreicht. Entsprechend kann eine besonders gleichmäßige Ausbringung von Spritzflüssigkeit erzielt werden. Die anderen Mischkammer-Fluidverteilereinheiten 20 (nicht dargestellt) der Spritzvorrichtung können identisch aufgebaut sein. Hierbei können die Ausbringleitungen 15 aller Mischkammer-Fluidverteilereinheiten die gleiche Länge aufweisen.

Vorstehend wurde bereits festgestellt, dass alternativ hierzu auch die Möglichkeit besteht, dass z. B. zwar alle Ausbringleitungen einer Mischkammer die gleiche Länge aufweisen, jedoch Ausbringleitungen unterschiedlicher Mischkammern unterschiedlich lang sein können. Hierbei können die sich hieraus ergebenen unterschiedlichen Durchflusszeiten durch die Ausbringleitungen unterschiedlicher Mischkammer-Fluidverteilereinheit 20 durch eine Steuereinrichtung 8 entsprechend bei der zeitlichen Ansteuerung der Ausbringelemente 13 berücksichtigt werden. Beispielsweise können in einer Steuereinrichtung 8, z. B. ein zentrales Steuergerät zum Steuern des Spritzvorgangs, welches zur Steuerung der Ausbringelemente 13 mit diesen in Signalverbindung steht, Offset-Werte hinterlegt sein, die ein Maß für die unterschiedlichen Durchflusszeiten je Mischkammer angeben. Entsprechend können unter Verwendung derartiger Offset-Werte die Schaltzeiten für die Ausbringelemente exakt eingehalten werden, wenn einzelne Teilabschnitte des Auslegers einzeln angesteuert werden, so dass trotz teilweiser unterschiedlicher Länge der Ausbringleitungen die Spritzflüssigkeit im Wesentlichen zum gleichen Zeitpunkt aus den Ausbringleitungen austritt.

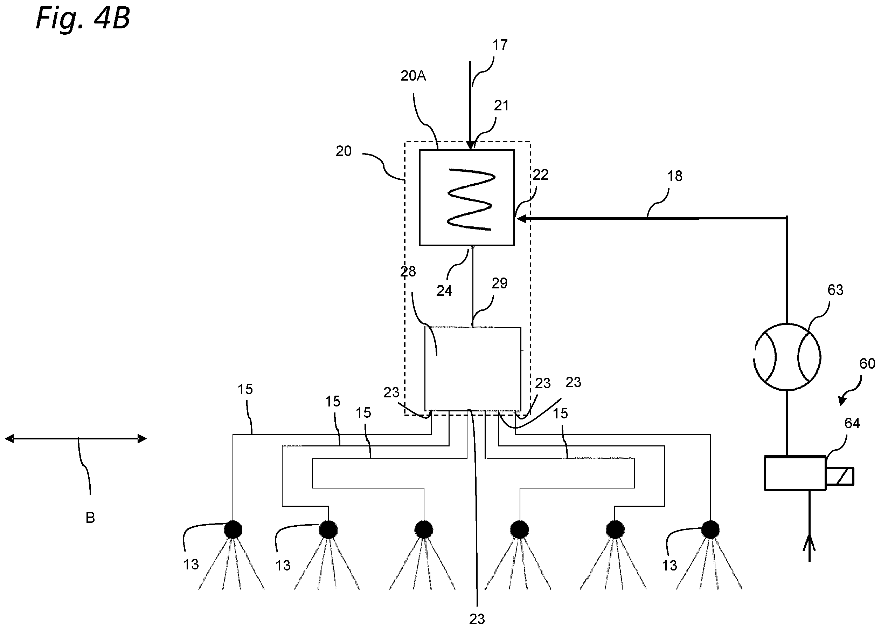

Figur 4B zeigt eine schematische Ansicht einer Mischkammer und eines Fluidverteilers mit angeschlossenen Zufuhrleitungen und Ausbringleitungen gemäß einer weiteren Ausführungsform. Die Besonderheit dieser Ausführungsform liegt darin, dass die Einrichtung 20 zum Vermischen mindestens zweier Spritzflüssigkeiten und zum Verteilen der vermischten Spritzflüssigkeiten auf mehrere Teilströme zwar wiederum eine Mischkammer 20A und einen Fluidverteiler 28 aufweist, diese jedoch nicht als bauliche Einheit ausgeführt sind, sondern dass der der Fluidverteiler 28 stromab zur Mischkammer 20A als separate Komponente angeordnet ist. Hierbei wird dem Einlass 29 des Fluidverteilers 28 aus einem Auslass 24 der Mischkammer 20A austretende Spritzflüssigkeit zugeführt. An den Verteilerauslässen 23 sind dann wieder die Ausbringleitungen 15, wie in Zusammenhang mit Figur 4A bereits beschrieben wurde, angeschlossen.

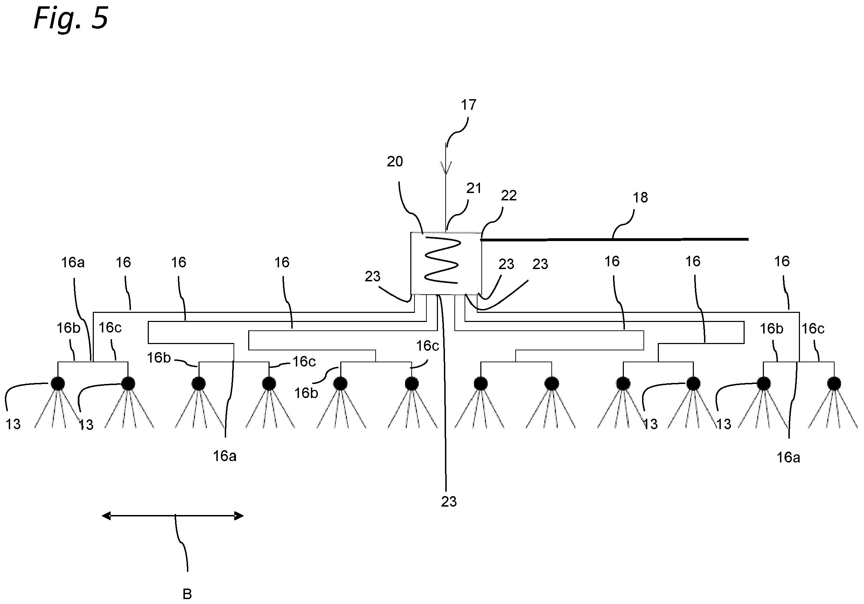

Figur 5 zeigt eine schematische Ansicht einer Mischkammer-Fluidverteilereinheit 20 mit angeschlossenen Ausbringleitungen gemäß einer weiteren Ausführungsform. Die Besonderheit dieser Ausführungsform liegt darin, dass die Ausbringelemente 13 jeweils nicht über separate Ausbringleitungen angeschlossen sind, sondern dass die Ausbringleitungen 16 jeweils eine Verzweigungsstelle 16a aufweisen. Zur Verdeutlichung dieses Aspekts ist in Figur 5 wiederum nur eine der Mischkammern-Fluidverteilereinheiten 20 mit zugeordneten Ausbringleitungen 16 und Ausbringelementen 13 dargestellt. Der besseren Übersichtlichkeit ist wiederum nur ein Teil der Komponenten mit Bezugszeichen gekennzeichnet.

Wie in Figur 5 erkennbar ist, weisen alle Ausbringleitungen 16 der Mischkammer-Fluidverteilereinheit 20 jeweils eine Verzweigungsstelle 16a auf. Jede der Verzweigungsstellen 16a stellt zwei Leitungszweige 16b, 16c bereit. Die Verzweigungsstelle 16a ist nach Art einer Y-Verzweigung bzw. T-Verzweigung ausgebildet, so dass jeder Leitungszweig 16b, 16c an seinem freien Ende an ein Ausbringelement 13 angeschlossen ist. Der vom Verteilerauslass 23 kommende Teilstrom teilt sich somit an der Verzweigungsstelle 16a nochmals in zwei weitere Teilströme auf. Auch hier sind wieder alle Ausbringleitungen 16 der Mischkammer-Fluidverteilereinheit 20 identisch ausgeführt, so dass der Zeitverzug, bis Spritzflüssigkeit von einem Verteilerauslass 23 das jeweilige Ausbringelement 13 erreicht, gleich ist. Die anderen Mischkammern-Fluidverteilereinheiten und Ausbringleitungen 16 (nicht dargestellt) der Spritzvorrichtung können identisch aufgebaut sein.

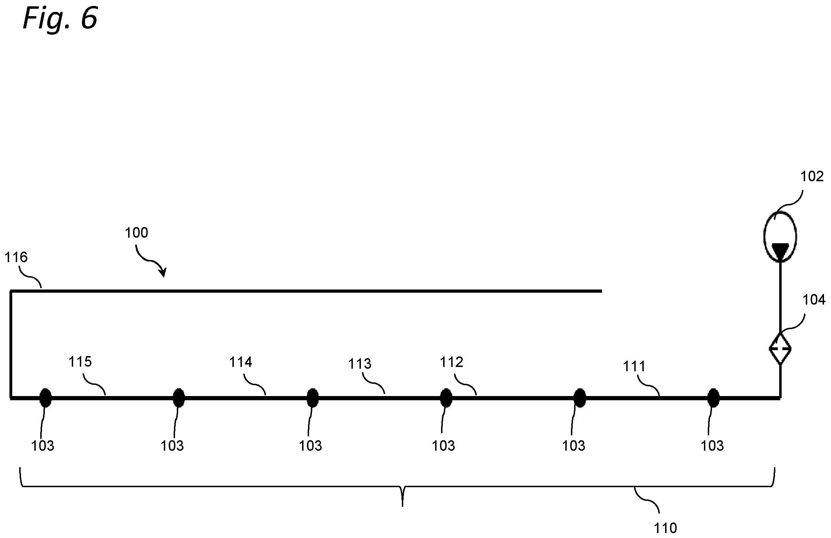

Die Figur 6 zeigt eine schematische Ansicht einer möglichen Ausführungsvariante einer Ringleitung, wie sie vorteilhaft in der Ausführungsform gemäß Figur 3 verwendet werden kann, beispielsweise die zweite Zufuhrleitung 100 der Figur 3, wobei im Unterschied zur Ausführungsform der Figur 3 hier noch ein optionales Filterelement 104 stromab zur Pumpe 102 eingezeichnet ist. Vorstehend wurde bei der Beschreibung der Ausführungsform gemäß Figur 3 bereits festgestellt, dass die Zufuhrleitung 100 einen sich in Längsrichtung des Spritzgestänges 11 erstreckenden und entlang des Spritzgestänges 11 geführten Abschnitt 110 aufweist, der mehrere Abzweigstellen 103 für Abzweige 18 zur Versorgung jeweils eines Teils der Ausbringelemente 13 mit Spritzflüssigkeit aufweist.

Eine vorteilhafte Ausführungsvariante der Ringleitung 100 zeichnet sich dadurch aus, dass der Innendurchmesser des Abschnitts 110 in Strömungsrichtung kleiner wird, vorzugsweise schrittweise kleiner wird.

Die Ringleitung 100 weist somit unterschiedliche Querschnitte auf, um somit möglichst gleichmäßige hohe Durchflussgeschwindigkeiten zu erreichen. Dies hat den Vorteil, um bei Anpassungen der Spritzflüssigkeit, z. B. bei Zugabe eines Pflanzenschutzmittels aus dem dritten Dosiersystem 50 oder Anpassung des Mischungsverhältnisses, schnell an allen Teilabschnitten 19 bzw. deren zugeordneten Mischkammern 20 und Ausbringelementen 13 das gewünschte Mittel zur Verfügung zu haben. Dadurch wird insbesondere die Trägheit des Systems bei der Anpassung der Konzentration der Flüssigkeit auf ein geringes Niveau reduziert, wodurch es nicht erforderlich ist, für jedes Pflanzenschutzmittel eine eigene Zirkulationsleitung vorzusehen, wie dies bspw. bei Systemen im Stand der Technik der Fall ist.

Hier weist der Rohrabschnitt 111 und der in Strömungsrichtung davorliegende Rohrabschnitt zwischen Pumpe 101 und der ersten Abzweigstelle 103 einen größeren Innendurchmesser auf als die in Strömungsrichtung auf den Rohrabschnitt 111 folgenden Rohrabschnitte 112, 113 und 114, während der darauffolgende Rohrabschnitt 115 wiederum einen noch kleineren Innendurchmesser aufweist. Lediglich beispielhaft kann der Rohrabschnitt 111 und der davorliegende Rohrabschnitt jeweils eine Nennweite DN (franz. Diametre Nominal) von jeweils DN8 aufweisen, die in Strömungsrichtung folgenden Rohrabschnitte 112, 113 und 114 eine Nennweite von jeweils DN6 aufweisen, während der darauffolgende Rohrabschnitt 115 eine Nennweite von DN4 aufweist. Der auf den Rohrabschnitt 115 in Strömungsrichtung folgende Rohrabschnitt 116 führt zurück zur Hauptmischkammer 70 (hier nicht dargestellt).

Messungen an einer derartigen Spritzvorrichtung zeigen z. B., dass die Strömungsgeschwindigkeit dadurch in dem Abschnitt 110 nicht kontinuierlich abnimmt, wie es bei einer Leitung mit konstantem Innendurchmesser der Fall wäre, sondern nur in einem kleinen Bereich schwankt und insbesondere an der in Strömungsrichtung gesehenen letzten Abzweigstelle 103 ungefähr gleich hoch ist wie an der ersten Abzweigstelle 103.

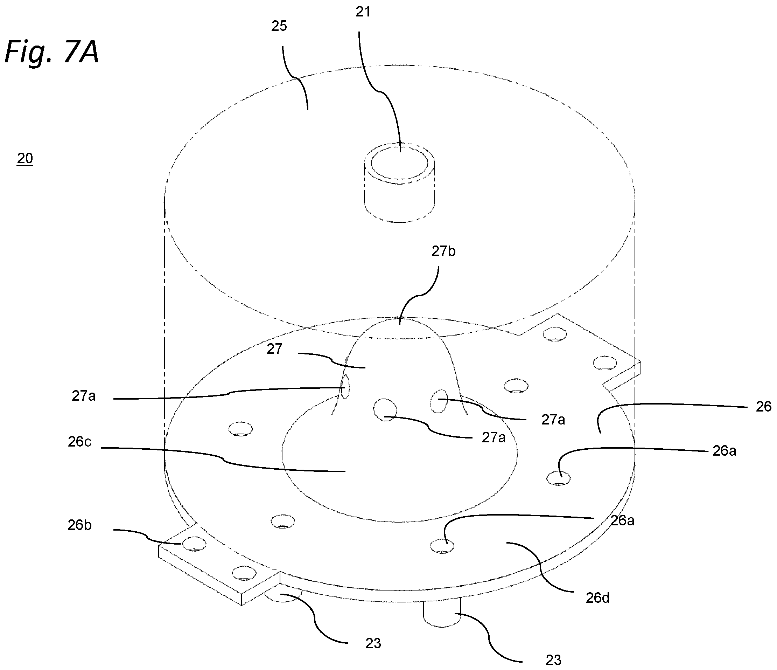

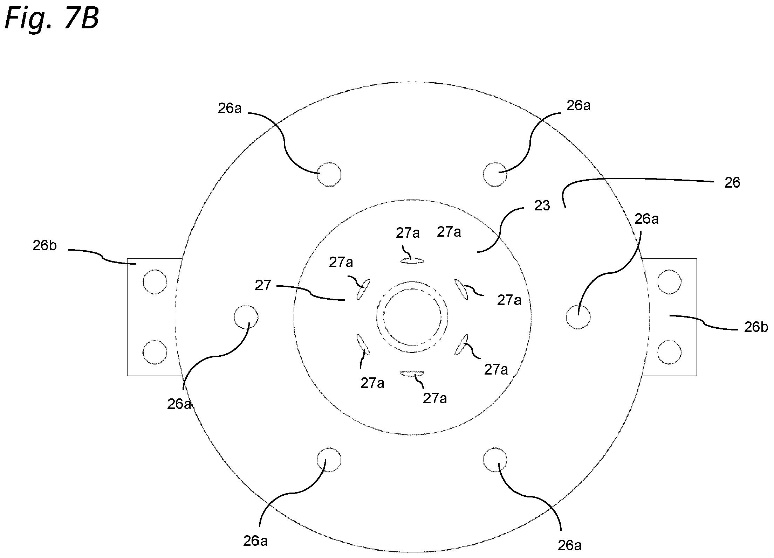

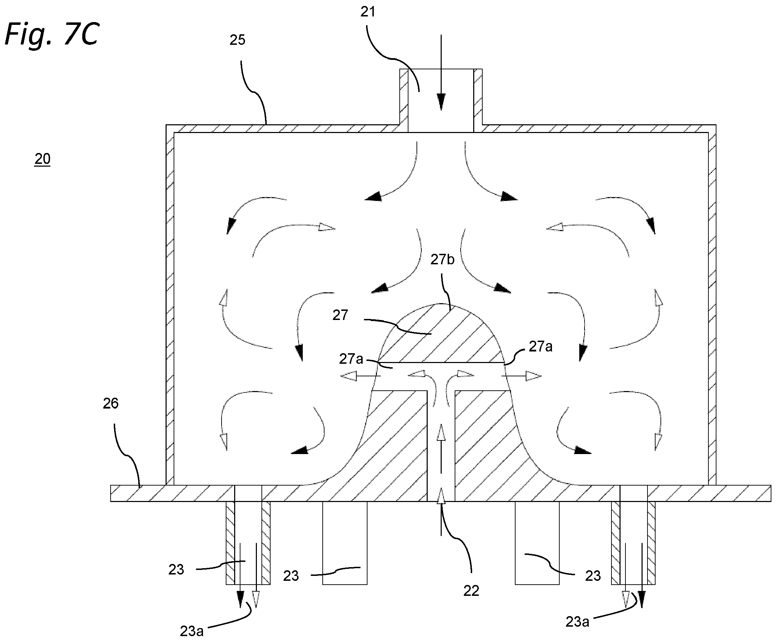

Figur 7A zeigt eine perspektivische Ansicht einer Mischkammer-Fluidverteilereinheit 20 der Spritzvorrichtung gemäß einer Ausführungsform der Erfindung. Nachfolgend wird ferner Bezug genommen auf die Figur 7B, die eine Draufsicht im Schnitt der Mischkammer zeigt, sowie auf die Figur 7C, die eine Seitenansicht im Schnitt der Mischkammer aus Figur 7A zeigt. In Zusammenhang mit den Figuren 7A bis 7C wird die Mischkammer-Fluidverteilereinheit 20 auch nur kurz als Mischkammer bezeichnet.

Die zylinderförmige Mischkammer 20 umfasst einen ersten Einlass 21 zum Einlassen eines ersten Flüssigkeitsstroms, einen zweiten Einlass 22 zum Einlassen eines zweiten Flüssigkeitsstroms und mehrere Auslässe (Verteilerauslässe) 23 zum Auslassen des vermischten Flüssigkeitsstroms als mehrere Teilströme 23a. Der erste Flüssigkeitsstrom ist in Figur 7C durch die Pfeile mit schwarzen Pfeilspitzen und der zweite Flüssigkeitsstrom durch Pfeile mit weißen Pfeilspitzen illustriert.

Hierbei ist der erste Einlass 21 mittig an einer ersten Seite der Mischkammer 20 angeordnet. Der zweite Einlass 22 ist an einer der ersten Seite gegenüberliegenden zweiten Seite der Mischkammer angeordnet, dort in einem mittleren Bereich 26c der zweiten Seite. Die Auslässe 23 sind ebenfalls an der zweiten Seite der Mischkammer 20, die den Boden der Mischkammer bildet, angeordnet.

Die zweite Seite bzw. der Boden der Mischkammer 20 wird durch eine kreisringförmige plane Grundplatte 26 gebildet, die eine sich in den Innenraum der Mischkammer 20 hineinragende bzw. erstreckende Erhebung 27 umgibt. Die kreisförmige Grundplatte 26 und die Erhebung 27 können auch als ein Bauteil ausgeführt sein. Die Grundplatte weist nach außen abstehende Befestigungsabschnitte 26b auf, mit Durchgangslöchern, in welche jeweils ein stiftförmiges Befestigungselement, z. B. eine Schraube oder ein Bolzen, geführt sein kann, um die Mischkammer an einem Ausleger 12 des Spritzgestänges 11 zu befestigen.

Auf der Grundplatte 26 sitzt eine zylinderförmige Abdeckhaube 25, die mittig den ersten Einlass 21 in Form eines Anschlusses, z. B. eines Anschlussstutzens, für eine Fluidleitung aufweist. Die Erhebung 27 im Bodenbereich der Mischkammer 20 ist als eine domartig gewölbte oder haubenartige Erhebung ausgebildet. Die Erhebung weist an ihrer Spitze bzw. ihrem distalen Ende einen geschlossenen gewölbten Mittelbereich 27b auf, der fluchtend unterhalb zum ersten Einlass 21 angeordnet ist. Die Erhebung weist unterhalb des gewölbten Mittelbereichs 27b mehrere Durchgangsöffnungen bzw. Eintrittsöffnungen 27a auf, die kreisförmig an der Mantelfläche der Erhebung 27 angeordnet sind. Die Eintrittsöffnungen 27a sind Teil des zweiten Einlasses 22 oder mit diesem fluidisch verbunden, so dass der zweite Flüssigkeitsstrom über die mehreren Eintrittsöffnungen 27a in den Innenraum der Mischkammer 20 eintritt. Hierbei mündet der an der zweiten Seite bzw. Unterseite der Mischkammer 20 mittig unterhalb der Erhebung 27 angeordnete zweite Einlass 22 in einen Einlasskanal, der sich innerhalb der Erhebung 27 zuerst in Richtung der gegenüber liegenden ersten Seite der Mischkammer erstreckt und anschließend um ca. 90° Grad abknickt und aufteilt, um den eintretenden zweiten Flüssigkeitsstrom den Eintrittsöffnungen 27a zuzuleiten. Die Eintrittsöffnungen 27a sind derart an der Erhebung angeordnet, dass der zweite Flüssigkeitsstrom in Form mehrerer Teilströme im Wesentlichen parallel zur zweiten Seite und fächerartig oder kreisscheibenartig in den Innenraum der Mischkammer einströmt.

Gleichzeitig ist der erste Einlass 21 mittig an der ersten Seite und fluchtend zu dem geschlossenen Mittelbereich 27b bzw. der Spitze der Erhebung 27 angeordnet, so dass ein über den ersten Einlass 21 eintretender Flüssigkeitsstrom zumindest teilweise auf den geschlossenen gewölbten Mittelbereich 27b der Erhebung 27 trifft und von dort in Umfangsrichtung gleichmäßig verteilt abgelenkt wird. Dies führt dazu, dass sich die Strömungswege des ersten Flüssigkeitsstroms und die Strömungswege des zweiten Flüssigkeitsstroms kreuzen, was in Figur 7C illustriert ist. Die dadurch entstehenden Verwirbelungen und Turbulenzen führen zu einer möglichst homogenen Durchmischung der beiden Flüssigkeitsströme. Der resultierende vermischte Flüssigkeitsstrom wird über Austrittsöffnungen 26a und die sich daran anschließenden Auslässe 23, die jeweils kreisförmig um die Erhebung 27 an der Bodenplatte 26 angeordnet sind, aus dem Innenraum der Mischkammer 20 herausgeleitet. Die Auslässe 23 sind an der Unterseite der Grundplatte 26 als Anschlüsse, z. B. als Anschlussstutzen, für Fluidleitungen ausgebildet. Vorliegend sind lediglich beispielhaft sechs Verteilerauslässe 23 vorgesehen. Es kann jedoch je nachdem, wie viele separate Leitungen an die Mischkammer 20 zur Weiterleitung der vermischten Spritzflüssigkeit angeschlossen werden, auch selbstverständlich eine andere Anzahl von Verteilanschlüssen 23 vorgesehen sein, z. B. acht, wie im nachfolgenden Beispiel beschrieben ist.

Die vorstehend beschriebene Mischkammer 20 bildet somit einen Raumbereich aus, in dem zwei Spritzmittelströme aufeinandertreffen und miteinander vermischt werden. Hierbei sind die Zuleitungsanschlüsse für die Spritzmittelströme so an der Mischkammer 20 angeordnet und ausgebildet, dass die zwei Spritzmittelströme ins Mischkammerinnere eingeleitet werden und sich dort kreuzen und vermischen. Um eine gute Durchmischung zu ermöglichen, ist die ins Mischkammerinnere hineinragende Erhebung 27 vorgesehen, die einerseits ein Ablenkelement für den erste Spritzmittelstrom ausbildet, um diesen senkrecht zu einer Eintritts- und Austrittsrichtung abzulenken und andererseits dazu dient, den anderen Spritzmittelstrom beim Eintritt in einzelne Teilstrahlen aufzufächern und in einer Richtung senkrecht zur Auslassrichtung abzulenken. Die dadurch entstehenden Verwirbelungen und Turbulenzen stellen sicher, dass die beiden Spritzflüssigkeiten zuverlässig vermischt werden, bevor diese als vermischter Spritzmittelstrom in Form einzelner vermischter Teilströme über die Auslässe 23 austreten und den Ausbringleitungen zugeleitet werden.

Die Mischkammer 20 ist insbesondere ausgebildet, die zugeführten Flüssigkeitsströme nicht nur zu vermischen, sondern die resultierende vermischte Spritzflüssigkeit in mehrere Teilströme 23a aufzuteilen, die jeweils über einen der Verteilerauslässe 23 aus der Mischkammer 20 austreten. Die Mischkammer dient somit gleichzeitig als Fluidverteiler zum Aufteilen eines vermischten Flüssigkeitsstroms in mehrere Teilströme, um die in der Mischkammer entstehende Mischung mindestens zweier Spritzflüssigkeiten in Teilströme aufzuteilen und mittels der mehreren Auslässe auf getrennten Teilströmungswegen aus der Mischkammer auszuleiten.

Der erste Einlass 21 und/oder der zweite Einlass 22 und/oder die Auslässe 23 können in die Abdeckhaube 25 oder die Grundplatte eingeschraubt sein oder mit dieser jeweils verschweißt, verklebt, verlötet oder dergl. sein. Auch können diese jeweils ein Innen- oder Aussengewinde zur Montage der jeweiligen Leitung aufweisen.

Um die Mischkammer 20, respektive die Bauteile der Mischkammer, möglichst rückstandslos reinigen zu können, kann/können diese zweckmäßig aus Edelstahl gefertigt sein. Auch Kunststoffe mit entsprechend geringen Rauigkeiten aufweisenden Oberflächen wären denkbar.

Figur 8 zeigt den Flüssigkeitsplan der Figur 3, ergänzt um eine Steuereinrichtung 8 und Signal- und/oder Befehlsübertragungselemente 8a zur Illustration der Funktionsweise der Einstellung der jeweiligen mittels der Dosiersysteme auszubringenden Flüssigkeitsmengen.

Zur Steuerung des Spritzvorgangs, z. B. zur Ansteuerung der Ausbringelemente 13 und zur Einstellung der jeweiligen mittels der Dosiersysteme auszubringenden Flüssigkeitsmengen, ist eine Steuereinrichtung 8 vorgesehen. Die Steuereinrichtung 8 ist eine programmtechnisch eingerichtete Rechnereinheit bzw. Computersteuerung 100, z.B. umfassend einen Jobrechner.

Die Steuereinrichtung 8 kann flächenspezifisch bei einer Fahrt der Feldspritze 1 über ein Feld gezielt einzelne Ausbringelemente 13 aktivieren und deaktivieren und die über einen Teilabschnitt 19 ausgebrachte Spritzflüssigkeitsmischung und -menge einstellen. Hierzu steht die Steuereinrichtung 8 in Signal- und/oder Kommunikationsverbindung mit den Ausbringelementen 13, mit den einzelnen Sensorelementen, wie z. B. die Durchflussmesser, und mit steuerbaren Elementen, wie die Ventile und Pumpen der Dosiersysteme. Entsprechende Signal- und/oder Befehlsübertragungselemente 8a sind jeweils durch gestrichelte Linien dargestellt. Der besseren Übersichtlichkeit wegen ist nur ein Teil der Signal- und/oder Befehlsübertragungselemente 8a exemplarisch dargestellt. Signal- und/oder Befehlsübertragungselemente zur Ansteuerung der Ausbringelemente 13 sind z. B. nicht dargestellt.

Die Signal- und/oder Befehlsübertragungselemente 8a können durch einen Datenbus, z. B. Isobus, realisiert sein oder durch sonstige Leitungen zur Signal- und Datenübertragung.

Die Steuereinrichtung 8 ist ferner ausgebildet, in an sich bekannter Weise Eingabebefehle und Steuerinformationen über eine Benutzerschnittstelle, z. B. Bedienterminal, Tablet-Computer, oder über eine Datenschnittstelle zu empfangen (nicht dargestellt).

Die Steuereinrichtung 8 ist eingerichtet, die Dosiereinrichtungen der Dosiersysteme 30, 40, 50 und die vierten Dosiereinrichtungen 60 zweckmäßig anzusteuern, um die jeweiligen mittels der Dosiersysteme auszubringenden Flüssigkeitsmengen und -mischungen einzustellen.

Die auszubringenden Flüssigkeitsmengen und -mischungen können über entsprechende Eingabeparameter vorgegeben werden. Diese können z. B. die auszubringende Menge (Applikationsmenge) an erster Spritzflüssigkeit 37 aus dem Haupttank 31 und der auszubringenden Menge (Applikationsmenge) aus dem Pflanzenschutzmitteltank 51 festlegen. Werte für diese Eingabeparameter können auf verschiedene Arten vor- bzw. eingegeben werden:
Entsprechende Werte für diese Eingabeparameter können z. B. über eine Benutzereingabe einer Bedienperson über die Benutzerschnittstelle manuell vorgegeben werden und/oder über eine Datenschnittstelle eingelesen werden, z. B. aus einer Datenbank, Applikationskarte oder Ackerschlagkartei. Die Datenbank kann eine Datenbank des Pflanzenschutzmittelherstellers sein. Hierbei kann die Steuereinrichtung 8 zudem mit einem Positionsbestimmungssystem gekoppelt sein. Entsprechende Parameter für die Einstellung können ferner anhand von Kamera- und/oder Sensordaten, welche bspw. einen Unkrautbefall und/oder ein Wachstumsstadium der Pflanzen ermitteln, festgelegt werden.

Beispielhaft wird nachfolgend eine Einstellung der mittels der Dosiersysteme auszubringenden Flüssigkeitsmengen und -mischungen beschrieben.

Durch die Eingabe der Eingabeparameter wird zunächst festgelegt, welche Menge eines "Hauptmittels" (erste Spritzflüssigkeit 37) pro Fläche ausgebracht werden soll. Lediglich beispielhaft sollen dies 1001/ha (100 Liter pro 10.000m²) sein. Diese "Hauptaufwandmenge" (erste Spritzflüssigkeit 37) wird anschließend mittels des ersten Dosiersystems 30 entsprechend bereitgestellt und auf die Fluidverteiler-Mischkammereinheiten 20 verteilt, indem die Steuereinrichtung 8 entsprechend in Abhängigkeit der Messwerte des Durchflussmessers 33, die Förderpumpe 32 und das Zirkulationsventil 34 ansteuert. Hierbei wird allen Fluidverteiler-Mischkammereinheiten 20 zunächst jeweils die gleiche Menge an Spritzflüssigkeit zugeführt. Zwar kann die Menge angepasst werden, jedoch immer nur über die Gesamtbreite des Spritzgestänge. Anders ausgedrückt, allen Fluidverteiler-Mischkammereinheiten 20 kann nur mehr oder weniger "Hauptmittel" zugeführt werden.

Denkbar wäre jedoch auch, dass fünfte Dosiereinrichtungen vorgesehen sind, über die die Fluidverteiler-Mischkammereinheiten 20 an die erste Ringleitung 35 fluidisch angeschlossen sind, wobei die fünften Dosiereinrichtungen jeweils ein Dosierventil umfassen. Dann könnten den einzelnen Fluidverteiler-Mischkammereinheiten 20 auch eine unterschiedliche Menge des "Hauptmittels" (erste Spritzflüssigkeit 37) zugeführt werden.

Durch die Eingabe der Eingabeparameter kann ferner festgelegt werden, ob und wieviel eines Zusatzmittels (dritte Spritzflüssigkeit 57), z. B. eines Distelmittels, entweder teilflächenspezifisch oder auf die Gesamtfläche ausgebracht werden soll. Eine teilflächenspezifische Ausbringung kann z. B. anhand einer Ackerschlagkartei vorgegeben werden. Beispielsweise kann über die Eingabeparameter vorgegeben werden, dass lediglich beispielhaft 5l/ha, d. h. 5 Liter auf 10.000m² des Zusatzmittels (dritte Spritzflüssigkeit 57) zusätzlich ausgebracht werden soll.

Da die Handhabung von so geringen Mengen des Zusatzmittels jedoch schwierig ist, wird das Zusatzmittel wiederum mit Klarwasser (zweite Spritzflüssigkeit 47) in der Hauptmischkammer 70 vermischt und damit vorverdünnt. Die Steuereinrichtung 8 ist entsprechend eingerichtet, ausgehend von der auszubringenden Menge an Zusatzmittel, z. B. 5l/ha, ein Mischungsverhältnis zur Vorverdünnung des Zusatzmittels (dritte Spritzflüssigkeit 57) zu bestimmen.

Das zweite Dosier- oder Versorgungssystem dient somit zweckmäßig nur zur Bereitstellung einer Trägerflüssigkeit für das Zusatzmittel (dritte Spritzflüssigkeit 57). Ist beispielsweise ein Mischungsverhältnis von 1/10 als Vorverdünnung definiert bzw. festgelegt, dann bedeutet dies, dass auf 5 Liter Zusatzmittel 50Liter Klarwasser (oder dergl. Trägerflüssigkeit) kommen. Dieses Mischungsverhältnis erzielt die Steuereinrichtung 8 durch entsprechende Ansteuerung der dritten Dosiereinrichtung 52, 53, 54 zur Bereitstellung der benötigten Menge des Zusatzmittels und durch Ansteuerung der zweite Dosier- oder Fluidversorgungseinrichtung 42, 43 zur Bereitstellung der benötigten Menge an Klarwasser zur Vorverdünnung des Zusatzmittels in der Hauptmischkammer 70. Hierbei wird die Pumpe 42 der zweite Dosier- oder Fluidversorgungseinrichtung 42, 43 nur solange aktiviert bis mittels des Durchflussmessers 43 die richtige Menge erfasst worden ist.

Die in der Hauptmischkammer 70 erzeugte Mischung wird dann entlang der zweiten Ringleitung 100 gefördert und wahlweise in definierten Mengen den Fluidverteiler-Mischkammereinheiten 20 zugeführt, d.h. bspw. bei teilflächenspezifischen Anwendungen nur einzelnen Fluidverteiler-Mischkammereinheiten 20 zugeführt und bspw. in unterschiedlichen Mengen zugeführt. Hierzu steuert die Steuereinrichtung die vierten Dosiereinrichtungen 60 entsprechend an. Ferner wird von der Steuereinrichtung 8 bei der Zufuhr des Zusatzmittels zu den Fluidverteiler-Mischkammereinheiten 20 die Vorverdünnung in der Hautmischkammer 70 berücksichtigt, so dass zur Ausbringung von 5 Litern pro Hektar Zusatzmittel über die gesamte Arbeitsbreite den Fluidverteiler-Mischkammereinheiten 20 in Summe bei einer Fläche von 1 Hektar nicht 5 Liter, sondern 50 Liter vorverdünntes Gemisch aus zweiter und dritter Spritzflüssigkeit 47, 57 zugeführt wird. Die Steuereinrichtung 8 ist entsprechend eingerichtet, durch Steuerung und/oder Regelung der Dosierventile 53 und 63 die entsprechenden Fördermengen einzustellen.

Die Steuereinrichtung 8 ist ferner ausgebildet, folgende Aspekte zu überwachen und entsprechend einzustellen:
Die vierten Dosiereinrichtungen 60 dosieren jeweils nur dann, wenn zumindest eine, nachgeordnete Spritzdüse 13 geöffnet ist, bzw. dosieren die vierten Dosiereinrichtungen 60 jeweils in Abhängigkeit der Anzahl an geöffneten Spritzdüsen 13 und/oder in Abhängigkeit von der mittels den Spritzdüsen 13 geförderten Ausbringmenge. Somit ist insbesondere eine gezielte Anpassung der Menge je Teilabschnitt, z. B. je Teilbreite, möglich.

Die Steuereinrichtung 8 ist ausgebildet, die zweite Dosier- oder Fluidversorgungseinrichtung 42, 43 und/oder die mindestens eine dritte Dosiereinrichtung 52, 53, 54 so anzusteuern, dass eine Summe der mit den Durchflussmessern 43, 53 der zweiten Dosier- oder Fluidversorgungseinrichtung und der mindestens einen dritten Dosiereinrichtung gemessenen Durchflussmenge gleich ist zur Summe der mit den Durchflussmessern 63 der vierten Dosiereinrichtungen 60 gemessenen Durchflussmenge.

Die vierten Dosiereinrichtungen 60 können insbesondere geschwindigkeitsabhängig und/oder applikationskartenabhängig arbeiten, so dass diese einen festen oder variablen Sollwert der Flüssigkeitsmenge in Abhängigkeit der Geschwindigkeit und/oder in Abhängigkeit einer Applikationskarte definieren. Vorstehend wurde bereits erwähnt, dass zur Festlegung der Eingabeparameter auch Kameradaten, Sensordaten, Datenbankdaten oder dergl. entsprechend herangezogen werden können, um teilabschnittsspezifisch den Ausbringvorgang zu steuern. Auch Daten eines Positionsbestimmungssystems können alternativ oder ergänzend herangezogen werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen.

### Bezugszeichenliste

- 1: Landwirtschaftliche Feldspritze, z. B. gezogene Feldspritze
- 2: Fahrwerk
- 3: Chassis
- 4: Kabine
- 5: Antriebseinrichtung
- 6: Fahrtrichtung
- 7: Vorratstank
- 8: Steuereinrichtung
- 8a: Signal- und/oder Befehlübertragungselement
- 9: Höhenverstellbares Parallelogrammgestänge
- 10: Spritzvorrichtung
- 11: Spritzgestänge
- 11a: Mittelteil
- 12: Seitlicher Ausleger
- 13: Ausbringelement, z. B. Spritzdüse
- 15: Ausbringleitung
- 16: Ausbringleitung
- 16a: Verzweigungsstelle
- 16b: Leitungszweig
- 16c: Leitungszweig
- 17: Mischkammerzufuhrleitung
- 18: Mischkammerzufuhrleitung
- 19: Teilabschnitt, z. B. Teilbreite
- 20: Mischkammer-Fluidverteilereinheit
- 20A: Mischkammer ohne Fluidverteilerfunktion
- 21: Erster Einlass
- 22: Zweiter Einlass
- 23: Auslass
- 23a: Teilströme
- 24: Auslass
- 25: Abdeckhaube
- 26: Grundplatte, z.B. Bodenplatte
- 26a: Austrittsöffnung
- 26b: Befestigungsbereich
- 26c: Mittlerer Bereich
- 26d: Äußerer Bereich
- 27: Erhebung
- 27a: Durchgangsöffnung
- 27b: Mittelbereich der Erhebung
- 28: Fluidverteiler
- 29: Einlass
- 30: Erstes Dosiersystem
- 31: Vorratstank, z. B. Haupttank
- 32: Pumpe
- 33: Durchflussmesser
- 34: Zirkulationsventil
- 35: Erste Zufuhrleitung, z. B. erste Ringleitung, Zirkulationsleitung
- 36: Abzweigstelle zur Mischkammer
- 37: Erste Spritzflüssigkeit, z. B. Hauptmischung
- 40: Zweites Dosier- oder Versorgungssystem
- 41: Vorratstank, z. B. Frischwasserbehälter
- 42: Pumpe
- 43: Durchflussmesser
- 47: Zweite Spritzflüssigkeit, z. B: Frischwasser
- 45: Rückschlagventil
- 50: Drittes Dosiersystem
- 51: Vorratstank, z. B. Pflanzenschutzmitteltank
- 52: Pumpe
- 53: Durchflussmesser
- 54: Dosierventil
- 57: Dritte Spritzflüssigkeit, z. B. Pflanzenschutzmittel
- 60: Vierte Dosiereinrichtung
- 63: Durchflussmesser
- 64: Dosierventil
- 65: Rückschlagventil
- 70: Hauptmischkammer
- 100: Zweite Zufuhrleitung, z. B. zweite Ringleitung, Zirkulationsleitung
- 101: Drosselventil
- 102: Pumpe
- 103: Abzweigstelle zur Mischkammer
- 104: Filter
- 110: Leitungsabschnitt mit kleiner werdendem Innendurchmesser
- 111-116: Leitungsabschnitt
- A: Schwenkachse in Fahrtrichtung
- B: Längsrichtung des Auslegers
- V: Vertikalrichtung des Auslegers

## Patentansprüche

1. Spritzvorrichtung (10) für eine landwirtschaftliche Feldspritze (1) zum dosierten Ausbringen von Spritzflüssigkeit, vorzugsweise auf landwirtschaftlichen Nutzflächen, umfassend
a) ein schwenkbares Spritzgestänge (11), umfassend zwei seitliche Ausleger (12), die jeweils eine Mehrzahl von Ausbringelementen (13) zum Versprühen und/oder Feinverteilen der Spritzflüssigkeit aufweisen,
b) wobei an jedem Ausleger mindestens eine Mischkammer (20; 20a) zum Vermischen mindestens zweier Spritzflüssigkeiten angeordnet ist, aufweisend
- einen ersten Einlass (21 zum Einlassen eines ersten Flüssigkeitsstroms, und
- mindestens einen zweiten Einlass (22) zum Einlassen eines zweiten Flüssigkeitsstroms;
c) wobei an jedem Ausleger (12) mindestens ein Fluidverteiler (20; 28) zum Verteilen der von der Mischkammer vermischten Spritzflüssigkeiten auf mehrere Teilströme angeordnet ist, aufweisend mehrere Verteilerauslässe (23) für die Teilströme, und
d) wobei jedes der Ausbringelemente (13) über eine Ausbringleitung (15; 16) mit einem der Verteilerauslässe (23) fluidisch verbunden ist.

2. Spritzvorrichtung (10) nach Anspruch 1, wobei die Mischkammer (20) und der Fluidverteiler (20) als bauliche Einheit und/oder kombinierte Mischkammer-Fluidverteilereinheit (20) ausgeführt sind, die ausgebildet ist, verschiedene Spritzflüssigkeiten miteinander zu vermischen und die resultierende vermischte Spritzflüssigkeit über die mehreren Verteilerauslässe (23) als Teilströme (23a) auszugeben.

3. Spritzvorrichtung (10) nach Anspruch 1, wobei der Fluidverteiler (28) stromab zur Mischkammer (20A) angeordnet ist, wobei einem Verteilereinlass (29) des Fluidverteilers (28) aus einem Auslass (24) der Mischkammer (20A) austretende Spritzflüssigkeit zuführbar ist.

4. Spritzvorrichtung (10) nach einem der vorherigen Ansprüche, wobei
a) ein Flüssigkeitsstrom von Spritzflüssigkeit mittels des Fluidverteilers (20; 28) in Teilströme (23a) verzweigt und mittels der Ausbringleitungen (15; 16) auf getrennten Teilströmungswegen vom Fluidverteiler (20; 29) zu den jeweiligen Ausbringelementen (13) gefördert wird; und/oder
b) die Ausbringleitungen (15; 16) derart ausgelegt sind, dass die einem Fluidverteiler (20; 29) zugeordneten Teilströme auf ihren getrennten Teilströmungswegen vom Fluidverteiler (20; 29) zu den jeweiligen Ausbringelementen (13) im Wesentlichen den gleichen Druckabfall und gleichen Zeitverzug, bis die Teilströme an dem jeweiligen Ausbringelement (13) ankommen, aufweisen.

5. Spritzvorrichtung (10) nach einem der vorherigen Ansprüche, wobei jedes der Ausbringelemente (13) über eine separate Ausbringleitung (15) mit einem der Verteilerauslässe (23) fluidisch verbunden ist.

6. Spritzvorrichtung (10) nach einem der Ansprüche 1 bis 4, wobei zumindest eine der Ausbringleitungen (16) jeweils zumindest eine Verzweigungsstelle (16a) aufweist, die eine Mehrzahl von Leitungszweigen (16b, 16c) bereitstellt, wobei jeweils ein Leitungszweig (16b, 16c) die Verzweigungsstelle (16a) mit einem Ausbringelement (13) verbindet.

7. Spritzvorrichtung (10) nach Anspruch 6, wobei die Verzweigungsstelle (16a) nach Art einer Y-Verzweigung oder nach Art einer T-Verzweigung ausgebildet ist.

8. Spritzvorrichtung (10) nach einem der vorherigen Ansprüche, wobei diejenigen Ausbringleitungen (15; 16), die am gleichen Fluidverteiler (20; 28) angeschlossen sind, jeweils die gleiche Länge aufweisen, oder wobei alle Ausbringleitungen (15; 16) die gleiche Länge aufweisen.

9. Spritzvorrichtung (10) nach einem der vorherigen Ansprüche, wobei die Ausbringleitungen (15; 16)
a) als Schlauchleitungen und/oder als flexible Leitungen ausgeführt sind; oder
b) als Rohre ausgeführt sind oder Rohrleitungen umfassen.

10. Spritzvorrichtung (10) nach einem der vorherigen Ansprüche, wobei zumindest ein Teil der Ausbringleitungen (15; 16)
a) einen nicht-geraden Verlauf, vorzugsweise gekrümmten, Verlauf aufweist, und/oder
b) mindestens einen Abschnitt aufweist, der in Längsrichtung (B) des Auslegers entlang eines der Ausleger (12) geführt ist und mindestens einen Abschnitt aufweist, der in Vertikalrichtung (V) entlang eines der Ausleger (12) geführt ist.

11. Spritzvorrichtung (10) nach einem der vorherigen Ansprüche, wobei die Ausbringleitungen (15; 16)
a) einen Innendurchmesser von kleiner 10 mm, weiter vorzugsweise von kleiner 6 mm, aufweisen; und/oder
b) eine Mindestlänge von 25 cm aufweisen, weiter vorzugsweise von mindestens 50 cm aufweisen; und/oder
c) sich in ihren Längen um nicht mehr als 30% unterscheiden.

12. Spritzvorrichtung (10) nach einem der vorherigen Ansprüche, wobei die Ausbringleitungen (15; 16) derart ausgelegt sind, dass
a) ein Druckabfall vom Fluidverteiler (20; 28) bis zum jeweiligen Ausbringelement (13) jeweils maximal 2 bar ist, weiter vorzugsweise jeweils maximal 1,5 bar ist; und/oder
b) ein Zeitverzug der Teilströme (23a) für ihren Strömungsweg vom Fluidverteiler (20; 28) bis zum Erreichen der jeweiligen Ausbringelemente (13) jeweils maximal fünf Sekunden, weiter vorzugsweise maximal zwei Sekunden, weiter vorzugsweise maximal eine Sekunde, ist.

13. Spritzvorrichtung (10) nach einem der vorherigen Ansprüche, wobei eine Anzahl der Verteilerauslässe (23) des Fluidverteilers (20; 28) im Bereich von 4 bis 16 liegt, vorzugsweise im Bereich von 6 bis 12 liegt.

14. Spritzvorrichtung (10) nach einem der vorherigen Ansprüche, wobei jeder Ausleger (12)
a) in mehrere Teilabschnitte (19) unterteilt ist, an jedem Teilabschnitt (19) eine Mehrzahl von Ausbringelementen (13) angeordnet ist und jedes Ausbringelement genau einem Teilabschnitt zugeordnet ist, und
b) mehrere der Fluidverteiler (20; 28) und Mischkammern (20; 20A) aufweist, derart, dass jedem Teilabschnitt (19) eine Mischkammer (20; 20A) und ein Fluidverteiler (20; 28) zugeordnet ist, entweder als kombinierte Mischkammer-Fluidverteilereinheit (20) oder als separate Bauteile(20A, 28), wobei die von der Mischkammer vermischte Flüssigkeit von dem Fluidverteiler in Teilströme aufgeteilt wird, und die dem jeweiligen Teilabschnitt zugeordneten Ausbringelemente mit dem Fluidverteiler dieses Teilabschnitts über entsprechende Ausbringleitungen verbunden sind.

15. Spritzvorrichtung (10) nach Anspruch 14, ferner aufweisend
a) eine erste Zufuhrleitung (35), über die die ersten Einlässe (21) der Mischkammern (20) gespeist werden und die einen sich entlang der ersten Einlässe (21) erstreckenden und/oder entlang des Spritzgestänges (11) geführten Abschnitt aufweist, dessen Innendurchmesser in Strömungsrichtung kleiner wird, vorzugsweise schrittweise kleiner wird; und/oder
b) eine zweite Zufuhrleitung (100), über die die zweiten (22) Einlässe der Mischkammern (20) gespeist werden und die einen sich entlang der zweiten Einlässe (22) erstreckenden und/oder entlang des Spritzgestänges geführten Abschnitt (110) aufweist, dessen Innendurchmesser in Strömungsrichtung kleiner wird, vorzugsweise schrittweise kleiner wird.

16. Spritzvorrichtung nach Anspruch 15, wobei die erste Zufuhrleitung (35) und/oder die zweite Zufuhrleitung (100) als Ringleitung ausgeführt sind.

17. Spritzvorrichtung (10) nach einem der Ansprüche 14 bis 16, wobei die Fluidverteiler (20; 28) und/oder die Mischkammern (20; 20A) der Teilabschnitte jeweils am Teilabschnitt (19) angeordnet sind, vorzugsweise mittig in Längsrichtung (B) des Auslegers (12) am Teilabschnitt (19) angeordnet sind.

18. Spritzvorrichtung (10) nach einem der vorhergehenden Ansprüche, ferner aufweisend
a) ein erstes Dosiersystem (30), umfassend einen ersten Vorratsbehälter (31) für eine erste Spritzflüssigkeit (37) und eine erste Dosiereinrichtung (32, 33), wobei dem ersten Einlass (21) der mindestens einen Mischkammer die erste Spritzflüssigkeit (37) mittels der ersten Dosiereinrichtung (32, 33) zuführbar ist;
b) ein zweites Dosier- oder Versorgungssystem (40), umfassend einen zweiten Vorratsbehälter (41) für eine zweite Spritzflüssigkeit (47), vorzugsweise Klarwasser, und eine zweite Dosier- oder Fluidversorgungseinrichtung (42, 43);
c) ein drittes Dosiersystem (50), umfassend mindestens eine dritte Dosiereinrichtung (52, 53, 54) und mindestens einen dritten Vorratsbehälter (51) und/oder mindestens eine Behälteraufnahme zur lösbaren Halterung eines dritten Vorratsbehälters (51), vorzugsweise eines Kanisters, für mindestens eine dritte Spritzflüssigkeit (57); und
d) eine Hauptmischkammer (70), der die zweite Spritzflüssigkeit durch die zweite Dosier- oder Fluidversorgungseinrichtung (42, 43) und die mindestens eine dritte Spritzflüssigkeit durch die mindestens eine dritte Dosiereinrichtung (52, 53, 54) zuführbar ist, wobei die Hauptmischkammer (70) ausgangsseitig an die mindestens eine Mischkammer (20) fluidisch angeschlossen ist.

19. Spritzvorrichtung (10) nach den Ansprüchen 16 und 18, wobei die Hauptmischkammer (70) fluidisch an die als Ringleitung ausgeführte zweite Zufuhrleitung (100) angeschlossen ist, wobei zwischen der zweiten Zufuhrleitung (100) und jeder der mindestens einen Mischkammer (20) eine vierte Dosiereinrichtung (60) angeordnet ist, umfassend jeweils einen Durchflussmesser (63) und ein Dosierventil (64), zum Steuern und/oder Regeln einer der jeweiligen Mischkammer (20) aus der zweiten Zufuhrleitung (100) zugeführten Menge an Spritzflüssigkeit.

20. Spritzvorrichtung (10) nach einem der vorherigen Ansprüche, wobei die Ausbringelemente (13) Spritzdüsen oder Spritzdüsen aufweisende Düsenstöcke sind.

21. Spritzvorrichtung (10) nach einem der vorherigen Ansprüche, wobei das Spritzgestänge (11) um eine in Fahrtrichtung verlaufende Schwenkachse (A) bewegbar an einem Trägerfahrzeug (2) mittelbar oder unmittelbar angeordnet ist, und/oder wobei die zwei seitlichen Ausleger (12) jeweils über eine vertikale Schwenkachse drehbar mit einem Mittelteil (11a) des Spritzgestänges (11) verbunden sind, und wobei jeder Ausleger (12) zueinander verschwenkbare Segmente aufweist, die um aufrechte Achsen zueinander verschwenkbar sind und die in einer senkrecht zur Fahrtrichtung der landwirtschaftlichen Verteilmaschine angeordneten Ebene relativ zueinander verschwenkbar sind.

22. Landwirtschaftliche Feldspritze (1), umfassend eine Spritzvorrichtung (10) nach einem der vorherigen Ansprüche, wobei die Feldspritze beispielsweise eine selbstfahrende (1) oder eine mittels eines Zugfahrzeugs gezogene oder eine an ein Zugfahrzeug angebaute Feldspritze ist.
